# EUROPEAN PATENT APPLICATION

(11) **EP 4 813 259 A1**
(43) Date of publication of application: **30.09.2026**
(21) Application number: 26167754.6
(22) Date of filing: 25.03.2026
(51) Int. Cl.: A47J 31/40

(54) **BREWING DEVICE, BEVERAGE MACHINE AND CONTROL METHOD FOR BREWING DEVICE**

(30) Priority: 26.03.2025 CN 202510368999; 26.03.2025 CN 202510369013
(71) Applicant: Kalerm Technology (Suzhou) Co., Ltd, Suzhou, Jiangsu 215134 (CN)
(72) Inventor: WANG, Zhu, Suzhou, Jiangsu, 215134 (CN)
(74) Representative: Winter, Brandl - Partnerschaft mbB

(57) **Abstract**

The present application discloses a brewing device, a beverage machine, and a control method for a brewing device. The brewing device includes: a frame; a motor provided on the frame; a transmission mechanism driven by the motor; a cylinder body drivably connected to the transmission mechanism, the power from the motor is transmitted to the cylinder body via the transmission mechanism, the cylinder body having a filling opening; a first piston drivably connected to the transmission mechanism, the first piston receives power transmitted from the motor via the transmission mechanism to close the brewing chamber by passing through the filling opening, the first piston defining a first axis; a second piston engaged with the cylinder body, the second piston and the cylinder body being capable of moving relative to each other; wherein during a powder material compacting process, the transmission mechanism drives the cylinder body and the first piston to move toward each other; during a powder residue ejection process, the transmission mechanism drives the cylinder body and the first piston to move away from each other. The design in which the transmission mechanism drives the cylinder body and the first piston to move toward or away from each other, which can shorten the brewing stroke, thereby improving the beverage preparation efficiency.

## Description

### TECHNICAL FIELD

The present application relates to the field of beverage preparation technology, and particularly relates to a brewing device, a beverage machine and a control method for a brewing device.

### BACKGROUND

Beverages such as coffee and tea typically require specialized brewing devices for preparation. Such devices commonly include components such as a brewing cylinder, a piston for compacting powder, a transmission mechanism, and a residue ejection rod. The operation involves placing powder material (e.g., coffee powder) into a brewing chamber of the brewing cylinder, adding hot water for brewing, and discharging the powder residue after brewing is completed. As demands for beverage quality and preparation efficiency increase, the brewing device of a beverage machine needs to perform tasks such as compacting the powder material, brewing, and cleaning the powder residue more precisely and efficiently.

However, in related art, a brewing device typically completes powder material compacting and brewing actions by controlling a brewing cylinder to rise to a highest position. After brewing is completed, the brewing cylinder is controlled to descend to a lowest position, and a residue ejection rod ejects powder residue to complete a powder residue cleaning work. This manner in which the brewing cylinder is sequentially driven between the highest position and the lowest position results in long time consumption, affecting beverage production efficiency.

### SUMMARY

An object of the present application is to provide a brewing device, a beverage machine, and a control method for a brewing device, so as to solve the technical problem of low beverage production efficiency in existing brewing devices.

The invention is defined by the appended set of claims.

### BRIEF DESCRIPTION OF THE DRAWINGS

Fig. 1 is a schematic diagram of a brewing device according to an embodiment of the present application.
Fig. 2 is a schematic diagram of a transmission mechanism of the brewing device shown in Fig. 1.
Fig. 3 is a cross-sectional schematic view taken along line A-A in Fig. 1.
Fig. 4 is a schematic diagram of another implementation of the transmission mechanism of the brewing device shown in Fig. 1.
Fig. 5 is a schematic diagram of another implementation of the transmission mechanism of the brewing device shown in Fig. 1.
Fig. 6 is a schematic diagram of the brewing device shown in Fig. 1, illustrating the brewing chamber in a powder receiving state.
Fig. 7 is a cross-sectional schematic view taken along line B-B in Fig. 6.
Fig. 8 is a schematic diagram of a brewing device according to another embodiment of the present application, showing a sweeping member in a driving connection with a first driving mechanism.
Fig. 9 is a schematic diagram of the brewing device of Fig. 8, showing the sweeping member disengaged from the driving connection with the first driving mechanism.
Fig. 10 is a partial schematic diagram of a brewing device according to yet another embodiment of the present application, illustrating a second piston abutting a limiting member along a first axis.
Fig. 11 is a bottom view of the brewing device of Fig. 10, illustrating the second piston rotating with the cylinder body and pressing against a cantilever arm.
Fig. 12 is a cross-sectional schematic view taken along line C-C in Fig. 11.
Fig. 13 is a schematic diagram of the brewing device of Fig. 12, illustrating the brewing chamber in a closed state, with the second piston abutting the limiting member along the first axis.
Fig. 14 is a flowchart of a control method for the brewing device of Fig. 1.

### DETAILED DESCRIPTION

The present application pertains to the field of beverage preparation technology, and particularly relates to a brewing device 100, a driving device 30, a beverage machine, and a control method for the brewing device, applicable to beverages such as coffee and tea that require brewing. In the specific embodiments of the present application, the brewing device 100 is described by way of example as a brewing device 100 capable of brewing coffee powder.

The core of the present application lies in proposing a brewing device 100 that, through a special transmission mechanism 32 design, enables a cylinder body 41 and a first piston 42 of the brewing device 100 to simultaneously move in opposite directions, thereby shortening a brewing stroke and improving beverage preparation efficiency.

Brewing devices in the related art typically employ a single screw structure, where a motor drives a single screw, and the rotation of the single screw drives the brewing cylinder body upward to complete the powder compacting and brewing actions. After brewing is completed, the single screw rotates in reverse, the brewing cylinder body moves downward, a piston ejects the powder residue, and a sweeping member sweeps away the residue. This structure has problems such as a long stroke, long operation time, poor sweeping effect, and easy powder spillage.

The present application improves the structure of a screw rod to enable the first piston 42 and the cylinder body 41 to move simultaneously, reducing beverage production time. The manner in which the first piston 42 and the cylinder body 41 move simultaneously includes at least one of the following three types: a first type, the first piston 42 moves downward, and the cylinder body 41 moves upward, shortening the brewing stroke; a second type, the first piston 42 moves upward, and the cylinder body 41 moves downward, accelerating separation of the first piston 42 and the cylinder body 41; a third type, the first piston 42 moves upward or downward, and the cylinder body 41 rotates, efficiently performing a residue discharge or a reset after a powder reception. Through the design of the cylinder body 41 rotating, combined with an improvement of the powder channel 25, a powder material overflow is effectively prevented, and a screw rod length can be shortened, reducing the overall height of the brewing device 100.

The main technical solutions of the present application include aspects of the brewing device 100, the driving device 30, the beverage machine, and the control method for the brewing device. These solutions will be described in detail below.

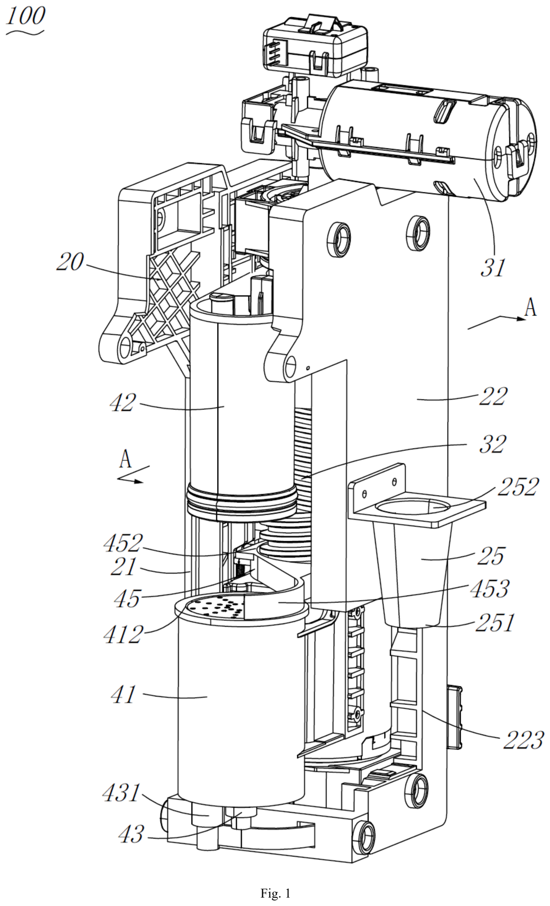

As shown in Figs. 1 to 3, in an embodiment of the brewing device 100 of the present application, the brewing device 100 includes a frame 20, a motor 31, a transmission mechanism 32, a cylinder body 41, a first piston 42, and a second piston 43.

The motor 31 is provided on the frame 20 for providing a power source to the transmission mechanism 32. The transmission mechanism 32 is driven by the motor 31, the cylinder body 41 is drivably connected to the transmission mechanism 32, and the power from the motor 31 is transmitted to the cylinder body 41 via the transmission mechanism 32. The cylinder body 41 has a brewing chamber 411, the brewing chamber 411 is configured to accommodate powder material for brewing, and the brewing chamber 411 has a filling opening 412 for filling the powder material.

The first piston 42 is drivably connected to the transmission mechanism 32, the first piston 42 receives the power from the motor 31 via the transmission mechanism 32 to either close the brewing chamber 411 by passing through the filling opening 412 or separate from the cylinder body 41. The first piston 42 defines a first axis Y1, the axis may be the center line of the first piston 42, and the extending direction of the first axis Y1 is also the moving direction of the first piston 42.

The power of the motor 31 is transmitted to the cylinder body 41 and the first piston 42. In one embodiment, a rotational movement of the motor 31 is converted through the transmission mechanism 32 into a linear movement of the cylinder body 41 and the first piston 42 along the first axis Y1.

The second piston 43 is engaged with the cylinder body 41, and the second piston 43 and the cylinder body 41 are capable of moving relative to each other. In the present embodiment, the second piston 43 is also known as a residue ejection rod, and is mainly configured to eject powder residue out of the brewing chamber 411 after brewing is completed.

In one embodiment, during a working process of the brewing device 100, the first piston 42 and the cylinder body 41 move relative to each other to perform a powder material compacting process in the brewing chamber 411, and the second piston 43 and the cylinder body 41 move relative to each other to perform a powder residue 60 ejection process from the filling opening 412. Specifically, during the powder material compacting process, the transmission mechanism 32 drives the cylinder body 41 and the first piston 42 to move toward each other along the first axis Y1; during the powder residue 60 ejection process, the transmission mechanism 32 drives the cylinder body 41 and the first piston 42 to move away from each other along the first axis Y1.

The transmission mechanism 32 is configured to simultaneously drive the cylinder body 41 and the first piston 42 to move. Illustratively, the transmission mechanism 32 driving the cylinder body 41 and the first piston 42 to move toward each other along the first axis Y1 may be the cylinder body 41 moving upward and the first piston 42 moving downward, jointly acting to compact the powder material within the brewing chamber 411 into a powder block. During a process in which the cylinder body 41 and the first piston 42 move toward each other, the second piston 43 maintains an unchanged relative position with respect to the cylinder body 41, that is, the second piston 43 and the cylinder body 41 synchronously move toward the first piston 42.

The transmission mechanism 32 is configured to simultaneously drive the cylinder body 41 and the first piston 42 to move. Illustratively, the transmission mechanism 32 driving the cylinder body 41 and the first piston 42 to move away from each other along the first axis Y1 may be the cylinder body 41 moving downward and the first piston 42 moving upward. During a process in which the cylinder body 41 and the first piston 42 move away from each other, the position of the second piston 43 relative to the cylinder body 41 changes. When the position of the second piston 43 relative to the cylinder body 41 changes, specifically, the cylinder body 41 moves away from the first piston 42, while the second piston 43 remains stationary relative to the frame 20, thereby ejecting the powder residue 60 within the brewing chamber 411.

The above design overcomes the disadvantages of relying only on an individual movement of a brewing cylinder body in traditional transmission mechanisms 32. Through a simultaneous reverse movement of the cylinder body 41 and the first piston 42, the brewing stroke is greatly shortened and the beverage preparation efficiency is improved.

In one embodiment, during a working process of the brewing device 100, the cylinder body 41 is capable of rotating between a first position and a second position. At the first position, the brewing chamber 411 and the first piston 42 correspond along the first axis Y1; at the second position, the brewing chamber 411 and the first piston 42 are axially offset; during a process in which the cylinder body 41 rotates between the second position and the first position, the transmission mechanism 32 drives the first piston 42 to move along the first axis Y1.

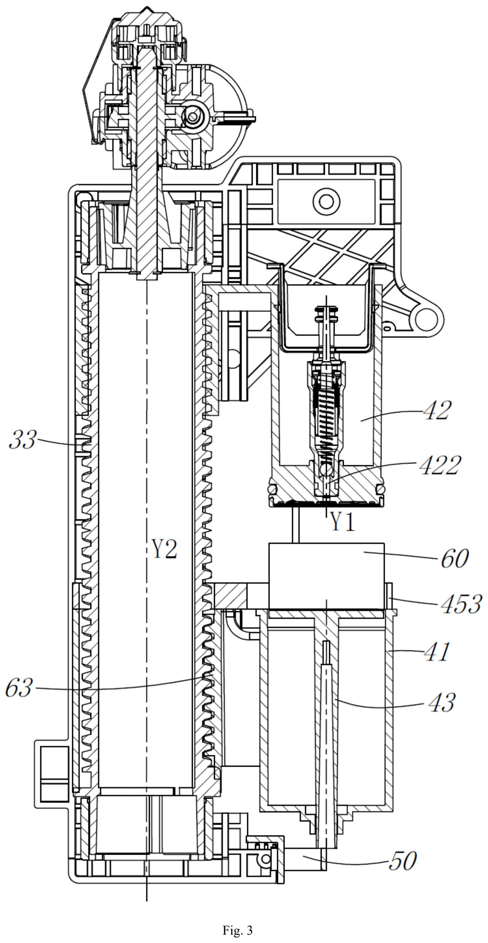

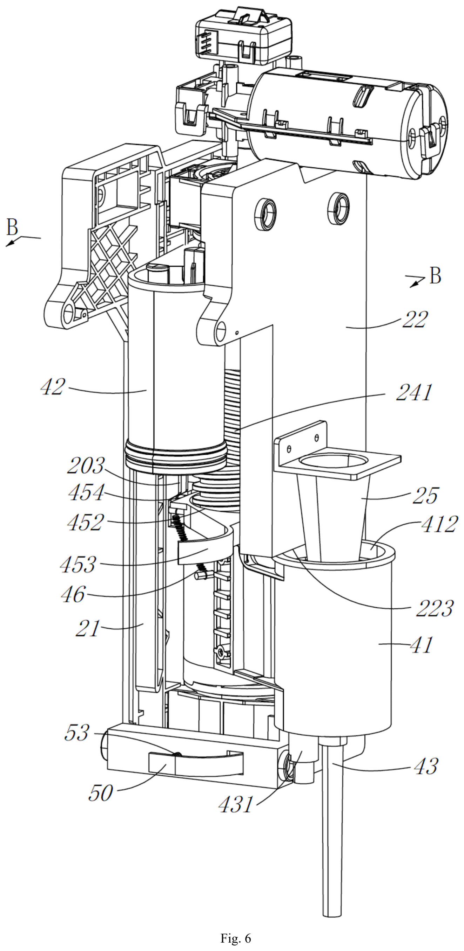

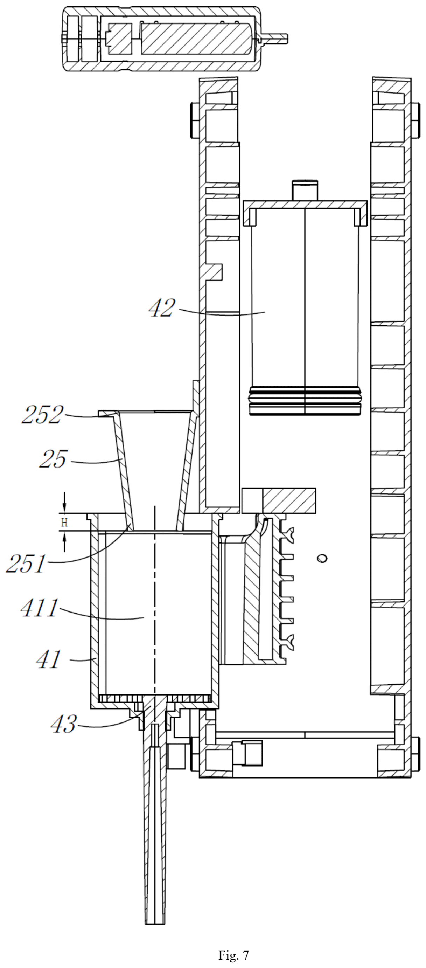

Illustratively, as shown in Figs. 1 and 3, a center line of the brewing chamber 411 is coaxial with the axis of the first piston 42, at which time the second piston 43 is in a state of being at a relatively high position with respect to the cylinder body 41 to eject the powder residue 60. Of course, when the center line of the brewing chamber 411 is coaxial with the axis of the first piston 42, the second piston 43 may also be in a state of being at a relatively low position with respect to the cylinder body 41 for awaiting a powder compacting and a brewing. At the second position, the brewing chamber 411 and the first piston 42 are axially offset. Illustratively, as shown in Figs. 6 and 7, the center line of the brewing chamber 411 is axially offset from the first axis Y1 of the first piston 42.

This design, wherein the cylinder body 41 rotates synchronously with the axial movement of the first piston 42, not only shortens the brewing stroke and reduces the beverage production time, but also reduces the overall height of the brewing device 100. Compared to the manner in related art where a transmission structure can only drive the cylinder body 41 to move in a single direction, the structural design of the present application is more compact and efficient.

The first position may be a position where the cylinder body 41 awaits the powder compacting and the brewing, or a position where the second piston 43 pushes the powder residue 60 upward. The second position may be a position where the cylinder body 41 receives the powder material, or a position where the cylinder body 41 cleans the powder residue 60. By simultaneously controlling a rotation of the cylinder body 41 between the first position and the second position and a movement of the first piston 42 through a single transmission mechanism, a time for step-by-step operations is reduced, thereby improving the beverage production efficiency. Additionally, a rotation angle of the cylinder body 41 and a movement distance of the first piston 42 can be controlled more precisely, ensuring repeatability and consistency of each operation. Furthermore, a number of components of the brewing device 100 can be reduced, the internal space layout of the machine can be optimized, making the machine more compact and suitable for household or small commercial scenarios.

Both a rotation action of the cylinder body 41 and a movement operation of the first piston 42 are achieved through the common transmission mechanism 32. This design approach not only reduces the number of transmission mechanisms 32 to be arranged, thereby achieving an effect of reducing the space required by the entire device, but also reduces production costs to a certain extent.

In one embodiment, the transmission mechanism 32 is configured as a single transmission component rotating around a second axis Y2, the first axis Y1 is disposed vertically and is mutually parallel to and spaced from the second axis Y2, and during a process in which the cylinder body 41 rotates from the second position to the first position, a rotation direction of the single transmission component is the same as a rotation direction of the cylinder body 41.

This design defines a relationship between the rotation directions of the single transmission component and the cylinder body 41, ensures reliable operation of the transmission mechanism 32, optimizes transmission efficiency, reduces energy loss, reduces wear of the transmission mechanism 32, and extends equipment service life.

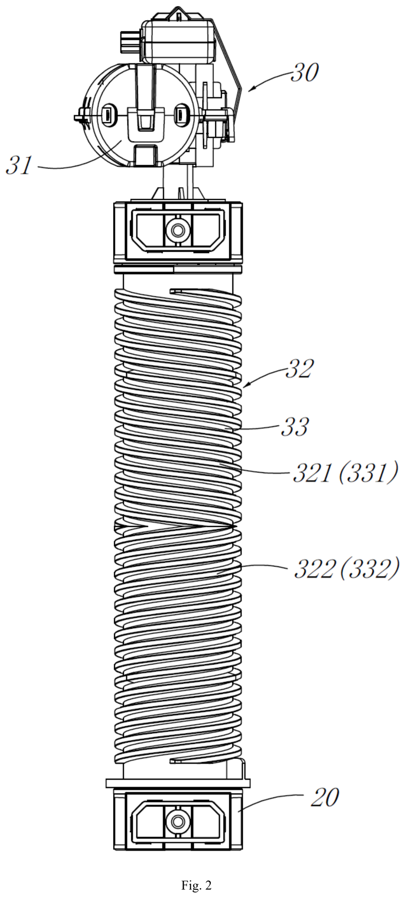

As shown in Figs. 2, 4 and 5, in one embodiment, the transmission mechanism 32 is configured to rotate around the first axis Y1, and the first axis Y1 is disposed vertically. The transmission mechanism 32 includes a first guide portion 321 and a second guide portion 322 arranged sequentially along an axial direction, the first piston 42 is drivably connected to the first guide portion 321, the cylinder body 41 is drivably connected to the second guide portion 322, the first guide portion 321 and the second guide portion 322 have opposite guiding directions, and the cylinder body 41 and the first piston 42 are capable of moving toward each other or moving away from each other under the driving of the transmission mechanism 32. Under this design, the motor 31 drives the transmission mechanism 32 to move, the transmission mechanism 32 drives the first piston 42 to move through the first guide portion 321, and simultaneously drives the cylinder body 41 to move through the second guide portion 322.

Since the first guide portion 321 and the second guide portion 322 have the opposite guiding directions, when the transmission mechanism 32 moves, the first piston 42 and the cylinder body 41 will move in opposite directions. By providing the first guide portion 321 and the second guide portion 322 with the opposite guiding directions, the structure of the transmission mechanism 32 is simplified, the transmission efficiency is improved, and precise control of the movement of the first piston 42 and the cylinder body 41 is ensured.

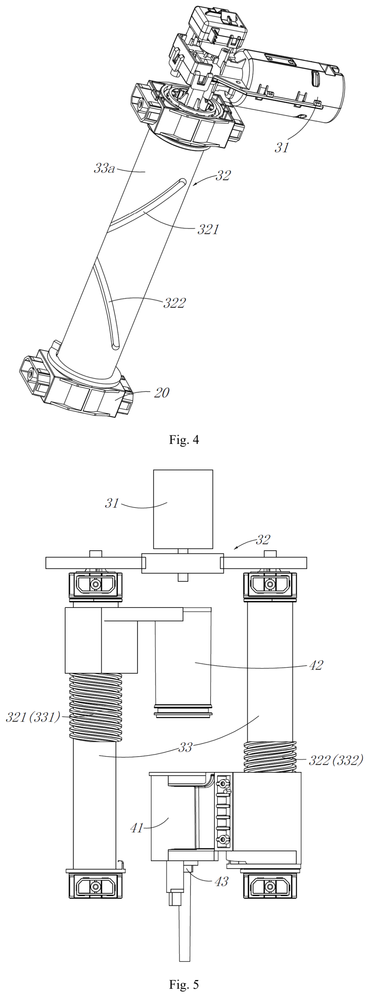

In one embodiment, referring to Figs. 2 and 5, the transmission mechanism 32 is configured as a vertically disposed threaded main shaft 33, the axis of the threaded main shaft 33 is parallel to the first axis Y1, and the motor 31 drives the threaded main shaft 33 to rotate. The first piston 42 is drivably connected to the threaded main shaft 33, and the first piston 42 is restricted to move along an axial direction of the threaded main shaft 33; the threaded main shaft 33 is drivably connected to the cylinder body 41 to drive the cylinder body 41 to rotate.

The threaded main shaft 33 includes a first threaded section 331 and a second threaded section 332, the first piston 42 is drivably connected to the first threaded section 331, and the cylinder body 41 is drivably connected to the second threaded section 332; the first guide portion 321 is configured as the first threaded section 331, the second guide portion 322 is configured as the second threaded section 332, and the first threaded section 331 and the second threaded section 332 have opposite thread hands.

"Opposite thread hands" herein means that when the threaded main shaft 33 rotates in the same direction, components respectively engaged with the first threaded section 331 and the second threaded section 332 will move in opposite directions.

For example, the first threaded section 331 may be a right-handed thread, and the second threaded section 332 may be a left-handed thread. When the motor 31 drives the threaded main shaft 33 to rotate clockwise, the first piston 42 engaged with the first threaded section 331 will move downward, while the cylinder body 41 engaged with the second threaded section 332 will move upward, and the two move toward each other, reducing the volume of the brewing chamber 411 and completing the powder material compacting process. Conversely, when the motor 31 drives the threaded main shaft 33 to rotate counterclockwise, the first piston 42 will move upward, the cylinder body 41 will move downward, and the two move away from each other, expanding the volume of the brewing chamber 411 to eject the powder residue 60, and performing powder material filling for a next beverage preparation after ejecting the powder residue 60.

The threaded main shaft 33 is configured with a design in which two threaded sections have different thread hands, with a compact structure. Driving connections of the first piston 42 and the cylinder body 41 to the threaded main shaft 33 respectively are simple, with a high transmission efficiency, and are capable of precisely controlling synchronous movement of the first piston 42 and the cylinder body 41, improving accuracy of the brewing process. The first piston 42 and the cylinder body 41 can be simultaneously driven by the threaded main shaft 33 to move, improving the beverage preparation efficiency, reducing user waiting time, and enhancing user experience.

Illustratively, the threaded main shaft 33 may be a screw rod, a lead screw, or other shaft-like or cylindrical component with external threads. The first piston 42 and the cylinder body 41 are respectively threadedly connected to the threaded main shaft 33, the first piston 42 and the cylinder body 41 are respectively restricted from rotating with the threaded main shaft 33, and when the threaded main shaft 33 rotates, the first piston 42 and the cylinder body 41 respectively move along an axial direction of the threaded main shaft 33 through a threaded engagement.

In some embodiments, the threaded main shaft 33 may be configured such that: the first threaded section 331 and the second threaded section 332 have equal thread leads, and the first threaded section 331 and the second threaded section 332 have equal thread engagement lengths.

The first threaded section 331 and the second threaded section 332 are configured to have the equal thread leads and the equal thread engagement lengths, ensuring synchronous movement accuracy of the cylinder body 41 and the first piston 42 to enhance the performance of the brewing device 100.

In some embodiments, the threaded main shaft 33 may be configured such that: the first threaded section 331 has a thread lead greater than a thread lead of the second threaded section 332, and the first threaded section 331 has a thread engagement length smaller than a thread engagement length of the second threaded section 332.

Since the first threaded section 331 has a larger lead, when the threaded main shaft 33 rotates, the first piston 42 drivably connected to the first threaded section 331 will move at a faster speed; while the second threaded section 332 has a smaller lead, the cylinder body 41 drivably connected to the second threaded section 332 will move at a slower speed. This design is suitable for scenarios where the cylinder body 41 and the first piston 42 need to work cooperatively at different speeds and displacements. For example, the first piston 42 needs to compact the powder material quickly and precisely, while the cylinder body 41 needs to rotate smoothly to a designated position.

Through differentiated design, both rapid compacting and slow rotation operations can be achieved through rotation by the single threaded main shaft 33, reducing demand for additional transmission components.

In some embodiments, the threaded main shaft 33 may be configured such that: the first threaded section 331 has a thread lead smaller than a thread lead of the second threaded section 332, and the first threaded section 331 has a thread engagement length greater than a thread engagement length of the second threaded section 332.

Since the first threaded section 331 has a smaller lead, the first piston 42 engaged with the first threaded section 331 will move at a slower speed, suitable for operations requiring precise control; while the second threaded section 332 has a larger lead, the cylinder body 41 engaged with the second threaded section 332 will move at a faster speed, suitable for operations requiring rapid positioning. This design is suitable for scenarios where the cylinder body 41 and the first piston 42 need to work cooperatively at different speeds and displacements. For example, the first piston 42 needs to compact the powder material slowly and precisely, while the cylinder body 41 needs to rotate rapidly to a designated position.

Through differentiated design, both precise compacting and rapid rotation operations can be achieved through rotation by the single threaded main shaft 33, reducing demand for additional transmission components.

In some embodiments, the threaded main shaft 33 may be configured such that: the first threaded section 331 and the second threaded section 332 are configured to drive the cylinder body 41 and the first piston 42 to move toward or away from each other along the first axis Y1 at equal speeds.

When the cylinder body 41 and the first piston 42 move toward each other or away from each other at the same speed, the movement of the two is completely synchronized, avoiding problems of uneven force or jamming caused by inconsistent speeds. A synchronous movement can reduce vibration and noise, making the operation of the entire brewing device 100 more stable.

In some embodiments, the threaded main shaft 33 may be configured such that: the first threaded section 331 and the second threaded section 332 are configured to drive the cylinder body 41 and the first piston 42 to move toward or away from each other along the first axis Y1 through equal path lengths.

When the cylinder body 41 and the first piston 42 have the equal movement path lengths, the movement of the two is completely symmetrical, the force distribution is more uniform, avoiding problems of uneven force or jamming caused by inconsistent path lengths. The symmetrical movement design can better utilize space, making the transmission system more compact and suitable for space-limited application scenarios.

These configuration methods increase design flexibility. According to actual application requirements, different movement speed and path requirements can be achieved by adjusting the thread leads and the thread engagement lengths, optimizing the movement characteristics of the first piston 42 and the cylinder body 41, and improving the adaptability and working efficiency of the device .

Through the above different thread design schemes, movement speeds and strokes of the first piston 42 and the cylinder body 41 can be flexibly adjusted to meet different brewing requirements. For example, by configuring equal speeds or equal path lengths, pressure uniformity and stability during the brewing process can be ensured, improving brewing quality.

In one embodiment, referring to Fig. 2, the first threaded section 331 and the second threaded section 332 are arranged sequentially along the axial direction of the threaded main shaft 33.

This arrangement makes the structure more compact, effectively reducing the overall height of the brewing device 100. As shown in Fig. 2, the first threaded section 331 is located at an upper portion of the threaded main shaft 33, the second threaded section 332 is located at a lower portion of the threaded main shaft 33, and the two threaded sections intersect at approximately a middle position of the threaded main shaft 33.

Arranging the first threaded section 331 and the second threaded section 332 sequentially on the same threaded main shaft 33 makes control of the simultaneous movement of the first piston 42 and the cylinder body 41 more convenient, shortens the brewing stroke, and significantly improves the brewing efficiency.

In other implementable ways, the first threaded section 331 and the second threaded section 332 may be arranged coaxially and at intervals on the same threaded main shaft 33.

Referring to Fig. 5, the first threaded section 331 and the second threaded section 332 may be respectively arranged on two parallel threaded main shafts 33, the two threaded main shafts 33 may be driven by the same motor 31, and the simultaneous reverse movement of the first piston 42 and the cylinder body 41 can also be achieved.

In one embodiment, as shown in Fig. 4, the transmission mechanism 32 is configured as a shaft cylinder 33a, the axis of the shaft cylinder 33a is parallel to the first axis Y1, and the first guide portion 321 and the second guide portion 322 are disposed on an outer circumferential surface of the shaft cylinder 33a.

The first guide portion 321 is configured as a first guide groove, and the second guide portion 322 is configured as a second guide groove. The motor 31 drives the shaft cylinder 33a to rotate, the first piston 42 is drivably connected to the first guide groove, and the cylinder body 41 is drivably connected to the second guide groove.

In the embodiment shown in Fig. 4, the cross-sectional shapes of the first guide portion 321 and the second guide portion 322 are both similar to rectangles. This design enables the first piston 42 and the cylinder body 41 to better engage with the guide portions during movement, reduces friction and resistance during the movement process, and improves stability and accuracy of the movement. At the same time, the rectangular cross-sectional shape also makes the transmission mechanism 32 easier during processing and manufacturing, reducing the production costs.

The shaft cylinder 33a is an alternative to the threaded main shaft 33, and the main difference between the two lies in the driving method. The threaded main shaft 33 achieves the reverse movement of the first piston 42 and the cylinder body 41 through differences in the thread hands, while the shaft cylinder 33a guides movement directions of the first piston 42 and the cylinder body 41 through guide grooves provided on the outer circumferential surface. The shaft cylinder 33a structure may have advantages of simpler structure and easier manufacturing in certain application scenarios.

Optionally, the threaded main shaft 33 may also be configured in the form of a shaft cylinder, with the first threaded section 331 and the second threaded section 332 formed on an outer surface of the shaft cylinder, which can increase areas where the first piston 42 and the cylinder body 41 are respectively threadedly connected to the shaft cylinder to make the driving connection more stable.

In the shaft cylinder structure, the first guide portion 321 is configured as a right-handed threaded section, the second guide portion 322 is configured as a left-handed threaded section, and the right-handed threaded section and the left-handed threaded section intersect at a middle portion of the shaft cylinder.

This design makes the shaft cylinder structure more compact, further reduces the height of the brewing device 100, and ensures coordination of the movement. The arrangement where the right-handed threaded section and the left-handed threaded section intersect at the middle portion of the shaft cylinder enables the first piston 42 connected to the right-handed threaded section and the cylinder body 41 connected to the left-handed threaded section to move in opposite directions under the same rotation direction.

Compared to traditional single screw rod structures, whether it is the dual-section threaded main shaft 33 design or the shaft cylinder structure design, both can achieve the simultaneous reverse movement of the first piston 42 and the cylinder body 41, thereby shortening the brewing stroke and improving the brewing efficiency. At the same time, both structures can cooperate with the cylinder body 41 rotation powder receiving mechanism to achieve precise filling of the powder material and effective cleaning of the powder residue 60 after the brewing. In practical applications, suitable transmission mechanism 32 embodiments can be selected according to specific manufacturing conditions, cost considerations, and usage requirements.

Additionally, referring to Fig. 6, in some embodiments, the transmission mechanism 32 is configured as a threaded main shaft 33, the first piston 42 and the cylinder body 41 are respectively drivably connected to different regions of the threaded main shaft 33; the threaded main shaft 33 is further configured to drive at least one of the first piston 42 and the cylinder body 41 to rotate relative to the frame 20.

This design enables the linear movement of both the first piston 42 and the cylinder body 41, as well as the rotational movement of at least one of them, is achieved through the same threaded main shaft 33, simplifies mechanism design, reduces the number of components, and lowers manufacturing costs and failure rates.

This design also improves the overall operational efficiency of the brewing device 100. Since the first piston 42 and the cylinder body 41 achieve linkage through the same threaded main shaft 33, their movement is more coordinated and consistent, reducing energy consumption and wear caused by friction or asynchronization between components. Additionally, the design of the threaded main shaft 33 makes transmission smoother, reduces noise caused by impact and vibration, and enhances the user experience. In a specific implementation, parameters such as material, pitch, and thread shape of the threaded main shaft 33 can be optimized according to actual requirements to meet the performance requirements of different brewing devices 100.

In one embodiment, as shown in Figs. 1 and 6, the brewing device 100 further includes a powder channel 25 provided on the frame 20, and the transmission mechanism 32 is capable of driving the cylinder body 41 to rotate between a first position and a second position. At the first position, the filling opening 412 is axially offset from the outlet of the powder channel 25, while the brewing chamber 411 axially aligns with the first piston 42 along the first axis Y 1; at the second position, the filling opening 412 axially aligns with the outlet of the powder channel 25, while the brewing chamber 411 is axially offset from the first piston 42.

This design enables the cylinder body 41 to switch between a powder receiving position and a brewing position. Optionally, between the first position and the second position, a rotation angle of the cylinder body 41 is less than 90 degrees. This smaller rotation angle design reduces a rotation stroke, improves powder receiving efficiency, and reduces required space.

In one embodiment, at the second position, the filling opening 412 axially aligns with the outlet of the powder channel 25, the brewing chamber 411 is axially offset from the first piston 42, and a portion of the powder channel 25 extends into the brewing chamber 411.

When the cylinder body 41 is at the position for receiving the powder material, i.e., the second position, the extending arrangement of the powder channel 25 enables the powder material to fall directly into the bottom of the brewing chamber 411 under guidance of the powder channel 25 and its own gravity without dispersing outward, which can significantly reduce powder overflow and contamination situations, will not affect the operation of the brewing device 100 due to the powder scattering onto other components, and improves overall operational stability of the brewing device 100 and beverage brewing quality.

In one embodiment, the powder channel 25 includes an outlet end portion 251 forming an outlet, the cylinder body 41 has a movement path between the first position and the second position, and the outlet end portion 251 is located on the movement path. When the cylinder body 41 moves between the first position and the second position, the outlet end portion 251 is driven by the cylinder body 41 to move relative to the frame 20 to give way to the cylinder body 41, so that the outlet end portion 251 can smoothly extend into the brewing chamber 411 or smoothly exit from the brewing chamber 411.

The outlet end portion 251 can move under the driving of the cylinder body 41, which can effectively avoid interference or jamming phenomena with the cylinder body 41, and enables the outlet end portion 251 to smoothly extend into the brewing chamber 411 and separate from the cylinder body 41.

Referring to Fig. 7, a channel height H of the powder channel 25 extending into the brewing chamber 411 is less than one quarter of an overall height of the powder channel 25, and the channel height H of the powder channel 25 extending into the brewing chamber 411 is less than one quarter of an overall height of the cylinder body 41. By configuring the channel height H of the powder channel 25 extending into the brewing chamber 411, a resistance for the cylinder body 41 to drive the outlet end portion 251 to move can be controlled within a range, ensuring smooth movement of the cylinder body 41 between the first position and the second position.

In one embodiment, the outlet end portion 251 deforms under pressing of the cylinder body 41, the deformation of the outlet end portion 251 can give way to movement of the cylinder body 41, and the structure of the outlet end portion 251 is simple.

In one embodiment, the outlet end portion 251 is configured of soft rubber material, enabling the outlet end portion 251 to deform under a force during movement of the cylinder body 41, to further improve reliability and durability of the structure.

In one embodiment, the powder channel 25 is configured of soft rubber material, the powder channel 25 can be installed as a whole on the frame 20, with simple configuration and convenient assembly.

In one embodiment, the cylinder body 41 contacts the outlet end portion 251 to exert an external force on the outlet end portion 251, causing the outlet end portion 251 to move relative to the frame 20. That is, the outlet end portion 251 can be configured as a rigid component and has a capability to move or rotate relative to the frame 20, thereby achieving an effect of giving way to movement of the cylinder body 41.

In one embodiment, the powder channel 25 further includes an inlet end portion 252, the inlet end portion 252 is disposed opposite to the outlet end portion 251, the cylinder body 41 contacts the outlet end portion 251 to exert an external force on the outlet end portion 251, causing the outlet end portion 251 to move relative to the inlet end portion 252. The inlet end portion 252 and the outlet end portion 251 of the powder channel 25 can be movably connected, only requiring the outlet end portion 251 to move relative to the inlet end portion 252, ensuring that the inlet end portion 252 can reliably cooperate with a mechanism for outputting the powder material.

In one embodiment, the cylinder body 41 contacts the outlet end portion 251 to exert an external force on the outlet end portion 251, causing the powder channel 25 to move relative to the frame 20. The entire powder channel 25 can be movably connected to the frame 20, making the configuration of the powder channel 25 more flexible and convenient for cooperating with the cylinder body 41.

In some embodiments, driven by the transmission mechanism 32, the cylinder body 41 is capable of rotating between a first position and a second position. At the first position, the brewing chamber 411 axially aligns with the first piston 42 along the first axis Y1; at the second position, the brewing chamber 411 is axially offset from the first piston 42.

Optionally, the cylinder body 41 further has a sweeping position where the brewing chamber 411 is axially offset from the first piston 42, the cylinder body 41 moves to the sweeping position to perform a sweeping action, and the sweeping position is located between the first position and the second position, or the sweeping position is the same as the second position.

This design enables the cylinder body 41 to switch between a powder receiving position and a brewing position, or to switch between a sweeping position and a brewing position. When the cylinder body 41 is at the powder receiving position, the brewing chamber 411 can receive the powder material; when the cylinder body 41 is at the sweeping position, the powder residue 60 can be scraped away from above the filling opening 412 of the cylinder body 41.

The sweeping action may be an action where the powder residue 60 is swept away after the second piston 43 ejects the powder residue 60. The sweeping action can be achieved through a movement of the cylinder body 41, or through a movement of a sweeping mechanism.

A configuration of the sweeping position optimizes the sweeping process. When the cylinder body 41 moves to the sweeping position, the brewing chamber 411 is axially offset from the first piston 42, facilitating execution of the sweeping action. The sweeping position can be configured between the first position and the second position, i.e., the cylinder body 41 rotates from the first position to the sweeping position, then rotates to the second position. Movement speeds or elapsed times of the two segments can be the same or different, and the cylinder body 41 can remain at the sweeping position for a preset duration. The sweeping position can also be the same as the second position, i.e., the cylinder body 41 directly moves to the second position. The sweeping position can be flexibly selected according to specific design requirements.

In one embodiment, during a process in which the transmission mechanism 32 drives the cylinder body 41 to rotate from the second position to the first position, the transmission mechanism 32 drives the first piston 42 to move along the first axis Y1 toward the cylinder body 41.

In another embodiment, during a process in which the transmission mechanism 32 drives the cylinder body 41 to rotate from the first position to the second position, the transmission mechanism 32 drives the first piston 42 to move along the first axis Y1 away from the cylinder body 41.

The above two embodiments achieve synchronisation between the rotation of the cylinder body 41 and the axial movement of the first piston 42, making the entire brewing process more continuous and efficient.

Taking the second position as a powder receiving position as an example, the specific working process is as follows: the cylinder body 41 rotates from the first position to the second position, the cylinder body 41 connects with the powder channel 25, and the powder material is filled into the brewing chamber 411 through the powder channel 25. Subsequently, the cylinder body 41 with the second piston 43 rotates from the second position back to the first position, the cylinder body 41 axially aligns with the first piston 42, preparing for the powder compacting and the brewing.

The design of the cylinder body 41 rotating for the powder receiving facilitates a configuration of the powder channel 25 extending into the brewing chamber 411, not only effectively preventing the powder material overflow, but also reducing the length of the threaded main shaft 33, lowering the overall height of the brewing device 100, and improving space utilization efficiency. At the same time, through synchronized control of the movement of the cylinder body 41 and the first piston 42, smooth transition between brewing and powder receiving functions is achieved, further improving working efficiency.

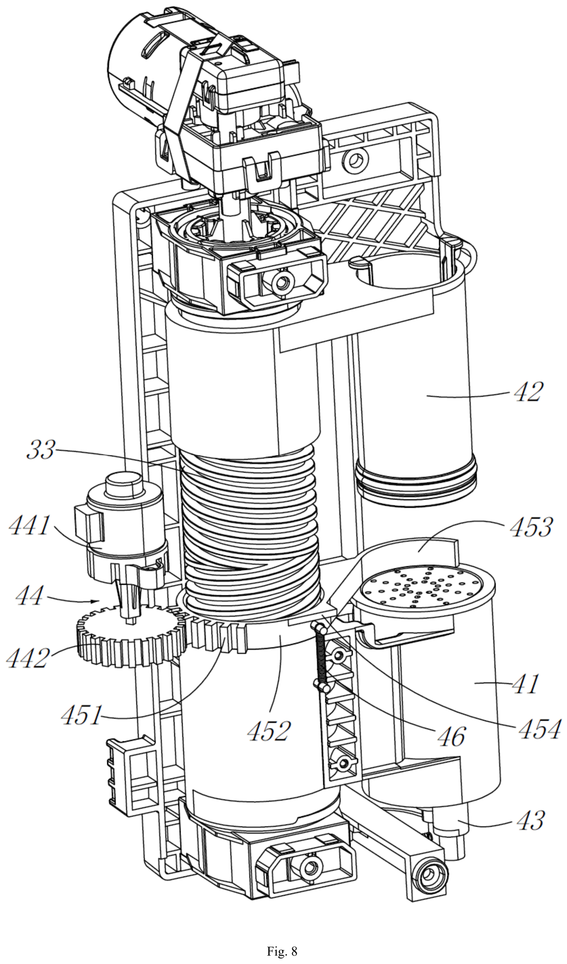

As shown in Figs. 6 and 8, the brewing device 100 of the present application further includes a sweeping member 45 provided above the cylinder body 41, a holding element 46 is disposed between the sweeping member 45 and the cylinder body 41, and the sweeping member 45 is supported above the cylinder body 41 through the holding element 46. Along the first axis Y1, during a process in which the brewing chamber 411 moves from a position axially aligned with the first piston 42 to a position axially offset from the first piston 42, the sweeping member 45 sweeps across an upper edge of the cylinder body 41.

In the present embodiment, the main function of the holding element 46 is to maintain a relative position between the sweeping member 45 and the cylinder body 41 in a height direction, particularly when the cylinder body 41 moves downward, ensuring that the sweeping member 45 can synchronously move downward. Additionally, during a process in which the brewing chamber 411 moves for sweeping, the holding element 46 can ensure that the sweeping member 45 maintains contact with the upper edge of the cylinder body 41, thereby cleaning the powder residue 60 above the cylinder body 41, preventing the sweeping member 45 and the upper edge of the cylinder body 41 from having gaps that would cause the powder residue 60 to not be swept clean.

The holding element 46 may be a torsion spring, a tension spring, or other elastic component. The holding element 46 is connected between the sweeping member 45 and the cylinder body 41. In a non-sweeping state, the holding element 46 holds the sweeping member 45 above the cylinder body 41, ensuring that the sweeping member 45 does not move arbitrarily. The holding element 46 allows the sweeping member 45 to rotate by a certain angle relative to the cylinder body 41, which is necessary for the sweeping action.

Through the ingenious design of the holding element 46, the sweeping member 45 can perform the sweeping action when needed and remain stable in a non-sweeping state, improving the reliability and stability of the entire device.

This design also effectively reduces direct friction between the sweeping member 45 and the cylinder body 41, extending the service life of the components. During the sweeping process, the sweeping member 45 can closely fit above the cylinder body 41, ensuring the sweeping effect and avoiding residue of the powder residue 60.

Configuring the holding element 46 as an elastic component not only enhances the flexibility of the sweeping member 45 but also acts as a buffer and shock absorber, effectively preventing vibrations generated by the sweeping action from affecting the cylinder body 41 and the entire brewing device 100, further improving the stability and durability of the device.

In one embodiment, the sweeping member 45 is restricted from rotating relative to the frame 20. Taking the second position of the cylinder body 41 as a sweeping position as an example, during a process in which the transmission mechanism 32 drives the cylinder body 41 to rotate from the first position to the second position, because the sweeping member 45 is restricted from rotating, the cylinder body 41 and the sweeping member 45 generate a relative rotation, and the sweeping member 45 sweeps across the upper edge of the cylinder body 41, thereby sweeping away the powder residue 60.

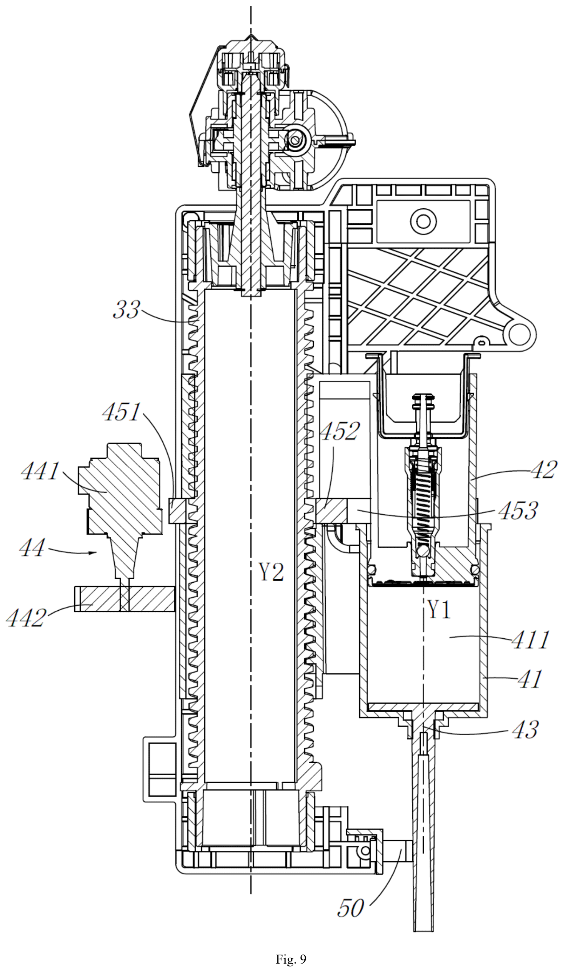

In one embodiment, referring to Figs. 8 and 9, the brewing device 100 further includes a sweeping mechanism, the sweeping mechanism includes a first driving mechanism 44 and a sweeping member 45, the first driving mechanism 44 selectively drives the sweeping member 45 to move relative to the cylinder body 41 to sweep away the powder residue 60 ejected from the filling opening 412; the first driving mechanism 44 is mounted on the frame 20, the sweeping member 45 is supported above the cylinder body 41, and during a process in which the cylinder body 41 moves relative to the frame 20 along the first axis Y1, the sweeping member 45 can establish or disengage a driving connection with the first driving mechanism 44.

By providing the sweeping mechanism, automatic sweeping of the powder residue 60 after the brewing is achieved, improving the automation degree and operational convenience of the brewing device 100. The first driving mechanism 44 provides power, and the sweeping member 45 performs the sweeping action. Through controlling the driving connection or the disengagement between the sweeping member 45 and the first driving mechanism 44 by the movement of the cylinder body 41 along the first axis Y1, a precise control of the sweeping action is achieved, avoiding problems that might be caused by continuously rotating the sweeping mechanism.

Specifically, the design of the sweeping mechanism also considers maintenance and cleaning of the equipment. Since the sweeping member 45 can be easily disengaged from the first driving mechanism 44 through the movement of the cylinder body 41, users can easily clean and maintain the sweeping mechanism without disassembling the entire equipment. This not only saves maintenance time, but also reduces maintenance costs of the equipment.

In one embodiment, the sweeping member 45 is provided with transmission teeth 451, the first driving mechanism 44 includes a first motor 31 and a transmission gear 442, the transmission gear 442 is connected to an output end of the first motor 31, the sweeping member 45 establishes a driving connection with the first motor 31 through meshing with the transmission gear 442 via the transmission tooth 451, thereby enabling the first motor 31 to drive the sweeping member 45 to rotate around a second axis Y2, and the second axis Y2 is parallel to the first axis Y1.

The present embodiment provides a specific driving method for the sweeping member 45. The transmission tooth 451 on the sweeping member 45 engages with the transmission gear 442 in the first driving mechanism 44, forming a gear transmission pair. The first motor 31 serves as a power source and drives the sweeping member 45 to rotate through the transmission gear 442. This gear transmission method has a simple and reliable structure, a high transmission efficiency, is easy to control, and can precisely control the rotation angle and speed of the sweeping member 45. The second axis Y2 is the rotation axis of the sweeping member 45, which is parallel to the first axis Y1 of the first piston 42.

This design also makes the rotation of the sweeping member 45 more uniform, ensuring uniformity and consistency of the sweeping effect, thereby improving the quality and efficiency of the beverage brewing.

In one embodiment, the sweeping member 45 includes a sleeve ring portion 452 and a sweeping plate portion 453, the sleeve ring portion 452 is sleeved on the threaded main shaft 33 and has a clearance fit with the threaded main shaft 33, the sweeping plate portion 453 is supported on the edge of the filling opening 412 and has a shape matching a shape of the edge of the filling opening 412; the first driving mechanism 44 drives the sweeping member 45 to rotate around the axis of the threaded main shaft 33 through the sleeve ring portion 452.

The sleeve ring portion 452 is an annular structure sleeved on the threaded main shaft 33. There is a clearance fit between the sleeve ring portion 452 and the threaded main shaft 33, which means the sleeve ring portion 452 can freely rotate and slide axially relative to the threaded main shaft 33, but will not have a significant radial wobble. The sweeping plate portion 453 is an executing component of the sweeping member 45, and its shape matches the shape of the edge of the filling opening 412 of the cylinder body 41. This design can ensure that the sweeping plate portion 453 can closely fit the edge of the filling opening 412, thereby thoroughly sweeping away the powder residue 60. The first driving mechanism 44 drives the entire sweeping member 45 to rotate by acting on the sleeve ring portion 452.

This structural design of the sweeping member 45 not only ensures thoroughness of sweeping, but also makes the movement of the sweeping member 45 flexible and controllable. The clearance fit between the sleeve ring portion 452 and the threaded main shaft 33 reduces friction and wear between the two components, extends the service life of the device, simplifies installation and movement control of the sweeping member 45. The matching shape between the sweeping plate portion 453 and the filling opening 412 avoids omission and residue of the powder residue 60 during the sweeping process, ensures good sweeping effect, and guarantees cleanliness and hygiene of the cylinder body 41. The rotation center line of the sleeve ring portion 452 is the axis of the threaded main shaft 33, the sweeping plate portion 453 fits the edge of the filling opening 412, the entire sweeping member 45 occupies a little space with a small rotation angle, making the structure of the entire brewing device 100 more compact.

Referring to Fig. 6, in one embodiment, the frame 20 includes a first side plate 21 and a second side plate 22 disposed at intervals, the threaded main shaft 33 is located between the first side plate 21 and the second side plate 22; the first side plate 21 or the second side plate 22 is provided with a limiting rib 203, when the sweeping member 45 is disengaged from the driving connection with the first driving mechanism 44, the sweeping member 45 abuts against the limiting rib 203, and the limiting rib 203 restricts the sweeping member 45 from rotating relative to the cylinder body 41; when the sweeping member 45 establishes the driving connection with the first driving mechanism 44, the sweeping member 45 separates from the limiting rib 203, and the limiting rib 203 allows the sweeping member 45 to rotate relative to the cylinder body 41.

In the present embodiment, the precise control of rotation of the sweeping member 45 is achieved through the limiting rib 203. The limiting rib 203 is typically a protrusion, a ridge or a rib plate, disposed on the first side plate 21 or the second side plate 22 of the frame 20. The sweeping member 45 has a limiting portion 454 cooperating with the limiting rib 203, such as a flat surface. When the sweeping member 45 is disengaged from the driving connection with the first driving mechanism 44, the limiting rib 203 abuts against the limiting portion 454 of the sweeping member 45, preventing the sweeping member 45 from rotating. When the sweeping member 45 establishes the driving connection with the first driving mechanism 44, the sweeping member 45 moves axially (for example, downward with the cylinder body 41), causing the limiting portion 454 to separate from the limiting rib 203, the limiting rib 203 releases abutment against the limiting portion 454, thereby allowing the sweeping member 45 to rotate. When the first driving mechanism 44 establishes the driving connection with the sweeping member 45 but does not drive the sweeping member 45, the sweeping member 45 is restricted from rotating relative to the cylinder body 41, ensuring that the entire beverage brewing process is more reliable.

In one embodiment, the limiting rib 203 is disposed on the first side plate 21, the second side plate 22 is provided with a clearance opening 223, the powder channel 25 is disposed on the outer side of the second side plate 22 away from the first side plate 21, the powder channel 25 is configured to transport beverage powder material to the brewing chamber 411, the clearance opening 223 allows the cylinder body 41 to rotate around the threaded main shaft 33 away from the first side plate 21 to align with the powder channel 25; the first driving mechanism 44 drives the sweeping member 45 to rotate around the axis of the threaded main shaft 33 toward the first side plate 21 to eject the powder residue 60 in the brewing chamber 411 from the filling opening 412.

Furthermore, the limiting rib 203 is disposed on the first side plate 21, while the clearance opening 223 is provided below the second side plate 22. The presence of the clearance opening 223 allows the cylinder body 41 to rotate a certain angle around the threaded main shaft 33 when necessary, thereby aligning the filling opening 412 of the brewing chamber 411 with the powder channel 25 to facilitate the filling of the beverage powder material. During sweeping, the first driving mechanism 44 drives the sweeping member 45 to rotate toward the first side plate 21, enabling smooth sweeping away of the powder residue 60.

At the same time, by providing the clearance opening 223 and the powder channel 25, the two processes of adding the beverage powder material and the sweeping do not interfere with each other, improving the efficiency of the entire device.

In one embodiment, when the sweeping member 45 and the cylinder body 41 rotate in opposite directions, the sweeping member 45 and the cylinder body 41 are configured to rotate synchronously.

In the present embodiment, the sweeping member 45 and the cylinder body 41 can be configured to rotate synchronously in opposite directions. This synchronous rotation can be a design constraint or a result under specific operating conditions. The sweeping member 45 and the cylinder body 41 synchronously rotate in opposite directions to achieve sweeping and reset after the sweeping. The rotation angles of the cylinder body 41 and the sweeping member 45 are smaller, thereby reducing the time required for sweeping and improving the beverage brewing efficiency.

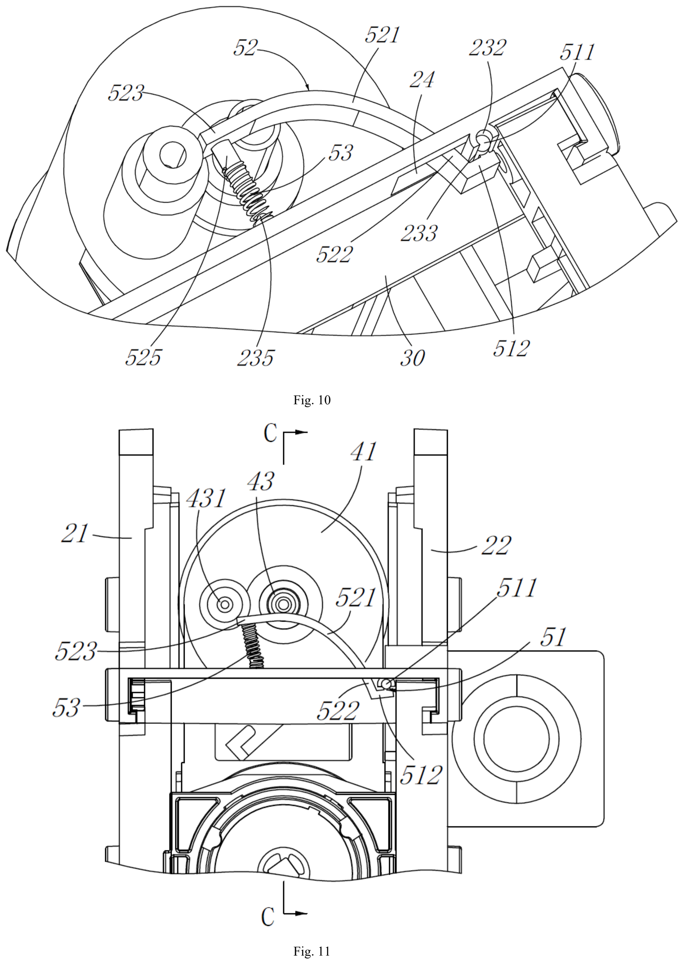

Optionally, referring to Figs. 10 to 11, the brewing device 100 further includes a limiting member 50, the limiting member 50 includes a pivot portion 51 and a cantilever arm 52, the pivot portion 51 is rotatably connected to the frame 20, and the cantilever arm 52 uses the pivot portion 51 as a swing pivot point. An elastic element 53 is disposed between the cantilever arm 52 and the frame 20. The second piston 43 presses against the cantilever arm 52 to cause the elastic element 53 to deform, thereby preventing the cantilever arm 52 from obstructing the rotation of the second piston 43. When the cylinder body 41 moves along the first axis Y1 away from the first piston 42, the elastic element 53 resets to cause the cantilever arm 52 to abut against the second piston 43 along the first axis Y1, thereby causing the second piston 43 to move to a residue ejection position under the pressing of the cantilever arm 52.

During a process in which the cylinder body 41 rotates from the second position to the first position, the second piston 43 presses against the cantilever arm 52 to cause the elastic element 53 to deform. When the cylinder body 41 and the first piston 42 move toward each other, the second piston 43 separates from the cantilever arm 52 to cause the cantilever arm 52 to reset under the restoring force of the elastic element 53. When the cylinder body 41 and the first piston 42 move away from each other, the cantilever arm 52 abuts against the second piston 43 along an axial direction of the pivot portion 51, and the second piston 43 moves under the pressing of the cantilever arm 52 to a position flush with the filling opening 412.

In the above brewing device 100, the transmission mechanism 32 can drive the cylinder body 41 to move along the first axis Y1, or to rotate around the second axis Y2. When the first piston 42 moves along the first axis Y1 to the filling opening 412, it can close the brewing chamber 411, forming a closed brewing space. The second piston 43 moves within the brewing chamber 411 and can move upward to a residue ejection position, pushing the powder residue 60 after the brewing out of the brewing chamber 411. During a process in which the cylinder body 41 rotates from a position away from the cantilever arm 52 to approach the cantilever arm 52, the second piston 43 will press against the cantilever arm 52, causing the elastic element 53 to deform and the cantilever arm 52 to rotate, thereby giving way to the second piston 43. When the cylinder body 41 moves along the first axis Y1 away from the first piston 42, the elastic element 53 recovers its deformation, the cantilever arm 52 resets under a restoring force of the elastic element 53, and the reset cantilever arm 52 can resist the second piston 43 and push the second piston 43 to the residue ejection position.

The design of the limiting member 50 and the elastic element 53 achieves functions of automatically avoiding the second piston 43 and assisting the second piston 43 in residue ejection, without requiring a complex control logic and an additional driving, simplifying the structure, reducing costs, and occupying a little overall space.

During an operation of the brewing device 100, in a process where the cylinder body 41 drives the second piston 43 to rotate to a position for receiving the powder material and then rotate back, the second piston 43 will compress the limiting member 50, at which time the elastic element 53 is compressed, the cantilever arm 52 rotates relative to the frame 20 through the pivot portion 51, the limiting member 50 gives way to the second piston 43, preventing an interference between the second piston 43 and the limiting member 50 during the process in which the cylinder body 41 rotates to the position for receiving the powder material and then rotates back.

When the cylinder body 41 moves along the first axis Y1 toward the first piston 42, the second piston 43 releases compression on the cantilever arm 52, and the elastic element 53 drives the cantilever arm 52 to reset. When the cylinder body 41 moves along the first axis Y1 away from the first piston 42, the cantilever arm 52 has already reset. During a process in which the cylinder body 41 moves along the first axis Y1 away from the first piston 42, the cantilever arm 52 abuts against the second piston 43 along the first axis Y1, thereby causing the second piston 43 to move relative to the cylinder body 41 to the residue ejection position under a pressing of the cantilever arm 52, achieving an automatic cleaning of the powder residue 60.

The brewing device 100 solves the problem of an inconvenient cleaning of the powder residue 60 through an ingenious cooperation between the limiting member 50 and the elastic element 53. At the same time, the cylinder body 41 can rotate to receive the powder material, making the structure of the brewing device 100 more compact, optimizing mechanical movement paths, and reducing the overall height of the brewing device 100.

In one embodiment, on a rotation path of the cylinder body 41 around the second axis Y2, the cylinder body 41 has a first position aligning with the first piston 42 along the first axis Y1 and a second position axially offset from the first piston 42. During a process in which the cylinder body 41 rotates from the second position to the first position, the second piston 43 presses against an arc-shaped section 521, and the cantilever arm 52 includes the arc-shaped section 521.

In one embodiment, on a rotation path of the cylinder body 41 around the second axis Y2, the cylinder body 41 has a first position aligning with the first piston 42 along the first axis Y1 and a second position axially offset from the first piston 42. During a process in which the cylinder body 41 rotates from the second position to the first position, the second piston 43 moves along the cantilever arm 52 in a direction from an engagement end 522 toward a free end 523, the cantilever arm 52 includes the engagement end 522 connected to the pivot portion 51 and the free end 523, and the engagement end 522 and the free end 523 are disposed opposite to each other.

It should be noted that when the cantilever arm 52 is compressed by the second piston 43, the elastic element 53 deforms, the compression force is absorbed through a deformation of the elastic element 53, the cantilever arm 52 rotates and swings to give way to the second piston 43, while the cantilever arm 52 itself does not deform. This design ensures stability and durability of the cantilever arm 52.

In one embodiment, the bottom of the cylinder body 41 is provided with a first transport pipeline 431, the first transport pipeline 431 is exemplified as a water inlet pipe, the first transport pipeline 431 is in communication with the brewing chamber 411, and the provision of the water inlet pipe enables hot water to be conveniently supplied into the brewing chamber 411 for coffee brewing.

In one embodiment, during a process in which the cylinder body 41 rotates from the first position to the second position, the second piston 43 moves relative to the cylinder body 41 away from the filling opening 412 under the action of its own gravity.

This design fully utilizes the gravity of the second piston 43 itself, enabling it to automatically adjust position during the rotation of the cylinder body 41. This automatic position adjustment design simplifies the driving control of the lower piston and simplifies operational procedures.

Specifically, when the cylinder body 41 rotates from the first position (for example, a powder compacting and brewing position aligning with the first piston 42) to the second position (for example, a position for receiving the powder material), after the cantilever arm 52 releases abutment against the second piston 43, the second piston 43 will move downward relative to the cylinder body 41 under the action of its own gravity, that is, the second piston 43 moves relative to the cylinder body 41 away from the filling opening 412, to expand the volume of the brewing chamber 411, facilitating reception of the powder material in preparation for brewing the next cup of beverage. When the cylinder body 41 rotates from the second position to the first position, the second piston 43 presses against the cantilever arm 52 with rotation of the cylinder body 41; when the elastic element 53 resets, the cantilever arm 52 abuts against the second piston 43 along the first axis Y1, the second piston 43 cannot move downward with the cylinder body 41 and thus automatically moves relative to the cylinder body 41 to the residue ejection position.

This automatic adjustment mechanism requires no additional power mechanism, simplifies control logic, reduces energy consumption and component wear, and improves the service life of the device. Moreover, this design enables various components of the brewing device 100 to work coordinately, achieving automated brewing and residue ejection processes.

In one embodiment, the free end 523 of the cantilever arm 52 and the pivot portion 51 are respectively disposed at two ends of the limiting member 50, the elastic element 53 is disposed between the free end 523 of the cantilever arm 52 and the frame 20, and the free end 523 uses the pivot portion 51 as a swing pivot point.

During a process in which the second piston 43 presses against the cantilever arm 52, the free end 523 of the cantilever arm 52 rotates using the pivot portion 51 as a swing pivot point, the free end 523 compresses the elastic element 53 to deform, a direction of a force from the second piston 43 on the cantilever arm 52 is different from a direction of an elastic force received by the free end 523, the second piston 43 receives a smaller resistance from the cantilever arm 52, more easily drives the cantilever arm 52 to rotate, and simultaneously, the cantilever arm 52 will not prevent the second piston 43 from rotating with the cylinder body 41, making a reset of the cylinder body 41 from the powder material receiving position more reliable.

A deformation amount of the elastic element 53 can be adjusted according to the magnitude of a force from the second piston 43 on the cantilever arm 52, thereby achieving buffering and stabilizing effects on the movement of the second piston 43. When a force from the second piston 43 disappears, the elastic element 53 can drive the free end 523 of the cantilever arm 52 to reset, preparing for a subsequent abutment and limiting against the second piston 43. This design not only improves the movement stability and reliability of the brewing device 100, but also effectively extends the service life of various components.

Referring to Fig. 10, in one embodiment, the free end 523 is provided with a first protruding column 525 facing the frame 20, the frame 20 is provided with a second protruding column 235, two ends of the elastic element 53 are respectively sleeved on the first protruding column 525 and the second protruding column 235, and a protrusion height of the first protruding column 525 is greater than a protrusion height of the second protruding column 235.

In the present embodiment, the elastic element 53 may be a compression spring or a torsion spring, both of which can achieve an elastic reset function of the cantilever arm 52.

In one embodiment, the pivot portion 51 includes a column pin 511 and a support plate bent relative to the cantilever arm 52, the cantilever arm 52 and the column pin 511 are located on the same side of the support plate. The frame 20 is provided with a column pin groove 232, the column pin groove 232 has an opening 233, the column pin 511 is embedded into the column pin groove 232 from the opening 233, the column pin 511 is rotatably connected to the column pin groove 232, providing a rotational support for the pivot portion 51 of the limiting member 50.

In one embodiment, the frame 20 is further provided with a through groove 24, the pivot portion 51 is connected to the frame 20 on an inner side of the through groove 24, and the free end 523 of the cantilever arm 52 extends from the inner side of the through groove 24 to an outer side of the through groove 24.

Along two directions orthogonal to the axis of the pivot portion 51, the cantilever arm 52 is smoothly configured along an extending direction of the cantilever arm 52 extending from the inner side of the through groove 24 to the outer side. During a process in which the cylinder body 41 rotates around the second axis Y2 to drive the second piston 43 to press against the cantilever arm 52, a force applied by the second piston 43 to the elastic element 53 gradually increases. In this way, the movement process has no impact, extending the component service life and reducing maintenance costs.

During the rotation of the cylinder body 41, a contact point between the cantilever arm 52 and the second piston 43 gradually changes along an extending direction of the cantilever arm 52. This design enables the pressure applied by the second piston 43 to be uniformly distributed on the cantilever arm 52, avoiding damage caused by excessive local pressure.

The design of the frame 20 and the cantilever arm 52 of the brewing device 100 is also easy to maintain and replace. When the cantilever arm 52 or the elastic element 53 needs to be replaced, the cantilever arm 52 can simply be removed from the through groove 24 for a replacement operation, greatly saving maintenance time and costs.

It is worth noting that the limiting member 50 of the present application is designed as a structure that does not deform itself, avoiding damage and failure problems caused by deformation fatigue.

As shown in Figs. 1 to 5, the present application further provides a driving device 30, including: a motor 31 and a transmission mechanism 32, the transmission mechanism 32 being driven by the motor 31. The transmission mechanism 32 is respectively drivably connected to the cylinder body 41 and the first piston 42, and the transmission mechanism 32 is configured to drive the cylinder body 41 and the first piston 42 to move away from each other or toward each other along the axial direction of the transmission mechanism 32. The cylinder body 41 has a brewing chamber 411, the cylinder body 41 and the first piston 42 move toward each other to reduce the volume of the brewing chamber 411, and the cylinder body 41 and the first piston 42 move away from each other to expand the volume of the brewing chamber 411.

The core innovation of the driving device 30 lies in achieving a bidirectional synchronous movement of the cylinder body 41 and the first piston 42 through the driving of the transmission mechanism 32 by a single motor 31. When the motor 31 rotates in one direction, the transmission mechanism 32 drives the cylinder body 41 and the first piston 42 to move toward each other, reducing the space of the brewing chamber 411; when the motor 31 rotates in an opposite direction, the transmission mechanism 32 drives the cylinder body 41 and the first piston 42 to move away from each other, expanding the space of the brewing chamber 411.

When the driving device 30 is used for brewing beverages, reducing the space of the brewing chamber 411 can compact the powder material; the first piston 42 can separate from the cylinder body 41, expanding the space of the brewing chamber 411, facilitating an ejection of the powder residue 60.

Through an axial movement of the cylinder body 41 and the first piston 42 away from each other or toward each other, the distance between two moving components can be quickly adjusted, improving the efficiency of the driving device 30.

When the driving device 30 is used for adjusting the size of the brewing chamber 411 space, the beverage brewing time can be shortened, thereby improving the beverage preparation efficiency. Through the cooperation of the motor 31 and the transmission mechanism 32, the driving device 30 can precisely control the movement speed and position of the cylinder body 41 and the first piston 42, ensuring pressure uniformity and stability during the brewing process and improving brewing quality. At the same time, compared to schemes using multiple driving sources, the single motor 31 driving design of the present application reduces complexity and failure rate of the device, reduces costs, and improves system reliability.

In summary, the driving device 30 solves problems of a long stroke and a low efficiency existing in traditional driving devices through a simple and efficient design, providing a reliable power source for rapid preparation of high-quality beverages.

In one embodiment, as shown in Fig. 3, the cylinder body 41 has a filling opening 412, and the first piston 42 extends into the cylinder body 41 from the filling opening 412 or exits from the cylinder body 41. This design enables the first piston 42 to form an effective closing with the brewing chamber 411 through the filling opening 412, and also facilitates cleaning work after the brewing is completed.

Furthermore, during a process in which the transmission mechanism 32 drives one of the cylinder body 41 and the first piston 42 to rotate, the transmission mechanism 32 drives another one of the first piston 42 and the cylinder body 41 to move linearly.

This linkage design of rotation and linear movement is an important innovation of the present application, which enables one of the cylinder body 41 and the first piston 42 to rotate while ensuring that another one of the cylinder body 41 and the first piston 42 can move linearly, thereby improving movement efficiency.

Taking the rotation of the cylinder body 41 as an example, the specific working process can be described as follows: when powder material filling is needed, the transmission mechanism 32 drives the cylinder body 41 to rotate to a position connecting with the powder channel 25, while the first piston 42 moves linearly away from the cylinder body 41 to provide a space for the powder material filling; after the filling is completed, the transmission mechanism 32 drives the cylinder body 41 to rotate back to a position aligning with the first piston 42, while the first piston 42 moves linearly toward the cylinder body 41, preparing to close the brewing chamber 411 for powder material compacting and subsequent brewing.

This linkage mechanism of rotation and linear movement achieves the function of the cylinder body 41 rotating for the powder receiving. During the process in which the cylinder body 41 rotates for the powder receiving, the first piston 42 moves linearly, enabling the first piston 42 to quickly close the brewing chamber 411, reducing the time for step-by-step operations and improving space utilization efficiency. In space-constrained application scenarios, this characteristic is particularly important.

By skillfully combining rotational movement with linear movement, the driving device 30 of the present application not only simplifies mechanism design and reduces the number of components, but also improves working efficiency and reliability of the driving device 30. This design provides new ideas for miniaturization and high efficiency of the driving device 30.

In one embodiment, as shown in Fig. 2, the transmission mechanism 32 is configured as a threaded main shaft 33, and the axis of the threaded main shaft 33 is parallel to the axis of the cylinder body 41. This design ensures that the transmission direction of the transmission mechanism 32 is consistent with the movement directions of the cylinder body 41 and the first piston 42, improving transmission efficiency.

The threaded main shaft 33 includes a first threaded section 331 and a second threaded section 332 arranged sequentially along the axial direction of the threaded main shaft 33, the first piston 42 is drivably connected to the first threaded section 331, the cylinder body 41 is drivably connected to the second threaded section 332, and the first threaded section 331 and the second threaded section 332 have opposite thread hands.

This dual-direction threaded section design is one of the core technical features of the present application, which enables the first piston 42 and the cylinder body 41 to simultaneously move in opposite directions when the motor 31 drives the threaded main shaft 33 to rotate.

Specifically, when the threaded main shaft 33 rotates clockwise, the first piston 42 connected to the first threaded section 331 will move downward, while the cylinder body 41 connected to the second threaded section 332 will move upward, the two components move toward each other, reducing the volume of the brewing chamber 411 and completing compaction of the powder material; when the threaded main shaft 33 rotates counterclockwise, the first piston 42 will move upward, the cylinder body 41 will move downward, the two components move away from each other, expanding the volume of the brewing chamber 411 and facilitating ejection of the powder residue 60.

Furthermore, the first threaded section 331 and the second threaded section 332 are arranged sequentially along the axial direction of the threaded main shaft 33. This arrangement makes the structure more compact, and can be achieved with a single threaded main shaft 33, effectively simplifying the structure of the driving device 30. As shown in Fig. 2, the first threaded section 331 is located at an upper portion of the threaded main shaft 33, the second threaded section 332 is located at a lower portion of the threaded main shaft 33, and there is a clear connection line between the two threaded sections.

Referring to Fig. 5, the first threaded section 331 and the second threaded section 332 are respectively disposed on two parallel threaded main shafts 33. In this way, the design of the transmission mechanism 32 can have more choices.

In another embodiment, as shown in Fig. 4, the transmission mechanism 32 is configured as a shaft cylinder 33a, an outer circumferential surface of the shaft cylinder 33a is provided with a first guide portion 321 and a second guide portion 322, the first piston 42 is drivably connected to the first guide portion 321, the cylinder body 41 is drivably connected to the second guide portion 322, and the first guide portion 321 and the second guide portion 322 have opposite guiding directions.

Under this design, during a process in which the motor 31 drives the shaft cylinder 33a to rotate, the shaft cylinder 33a drives the first piston 42 to move through the first guide portion 321, and the shaft cylinder 33a drives the cylinder body 41 to move through the second guide portion 322.

The shaft cylinder 33a is an alternative to the threaded main shaft 33, and the main difference between the two lies in the driving method. The threaded main shaft 33 achieves the reverse movement of the first piston 42 and the cylinder body 41 through differences in the thread hands, while the shaft cylinder 33a guides movement directions of the first piston 42 and the cylinder body 41 through guide grooves provided on the outer circumferential surface. The shaft cylinder structure may have advantages of simpler structure and easier manufacturing in certain application scenarios.

Furthermore, in the shaft cylinder structure, the first guide portion 321 can be configured as a right-handed threaded section, the second guide portion 322 can be configured as a left-handed threaded section, and the two intersect at a middle portion of the shaft cylinder 33a. This design makes the shaft cylinder structure more compact while ensuring stability and coordination of movement.

Whether adopting the threaded main shaft 33 structure or the shaft cylinder structure, the driving device 30 of the present application can enable the cylinder body 41 and the first piston 42 to move simultaneously in opposite directions through driving by a single motor 31, thereby shortening the brewing stroke and improving brewing efficiency. Both structures can cooperate with the rotating powder receiving mechanism of the cylinder body 41 to achieve precise filling of the powder material and effective cleaning of the powder residue 60 after brewing.

In practical applications, a suitable embodiment of the transmission mechanism 32 can be selected based on specific manufacturing conditions, cost considerations, and usage requirements. Regardless of which embodiment is selected, the driving device 30 of the present application can effectively drive the brewing device 100 to complete the entire process from powder material filling, compacting and brewing to cleaning of the powder residue 60.

In one embodiment, as shown in Fig. 6, the driving device further includes a frame 20 supporting the transmission mechanism 32, the first piston 42 defines a first axis Y1, the cylinder body 41 and the first piston 42 move toward each other or away from each other along the first axis Y1; driven by the transmission mechanism 32, the cylinder body 41 is capable of rotating around a second axis Y2 relative to the frame 20, and the first axis Y1 and the second axis Y2 are parallel.

This design enables the cylinder body 41 to move axially for powder material compacting and residue ejection, and to rotate around the second axis Y2 for powder receiving or residue discharge, achieving multifunctional integration.

To support this complex movement mode, the design of the frame 20 structure is crucial. The frame 20 includes a first side plate 21 and a second side plate 22 disposed at intervals, the first piston 42 is disposed between the first side plate 21 and the second side plate 22, and the first side plate 21 and the second side plate 22 restrict the first piston 42 and the cylinder body 41 from rotating relative to the frame 20.

This dual side plate design provides a stable support structure, ensuring that the first piston 42 and the cylinder body 41 can move precisely along predetermined trajectories.

Particularly, the second side plate 22 is provided with a clearance opening 223, and the clearance opening 223 allows the cylinder body 41 to pass through so that the cylinder body 41 can rotate relative to the frame 20. This design detail is a key to achieving the rotation function of the cylinder body 41. The clearance opening 223 of the second side plate 22 provides a necessary space for the rotation of the cylinder body 41, while the restriction imposed by the first side plate 21 and the second side plate 22 on the first piston 42 ensures that the first piston 42 can only move axially without rotating.

The first side plate 21 and the second side plate 22 not only restrict rotational degrees of freedom of the first piston 42, but also provide structural support for the entire driving device 30. The dual side plate design enhances the rigidity of the frame 20, reduces vibrations and deformations that may occur during operation, and improves movement accuracy and device lifespan.

In an actual operation, when the transmission mechanism 32 drives the cylinder body 41 to rotate, the cylinder body 41 will rotate from the first position to the second position through the clearance opening 223 of the second side plate 22. This rotation powder receiving design, combined with the extending design of the powder channel 25, effectively prevents powder material overflow during falling. At the same time, since the rotation angle of the cylinder body 41 is less than 90 degrees, the rotation stroke is reduced, the powder receiving efficiency is improved, and required space is reduced.

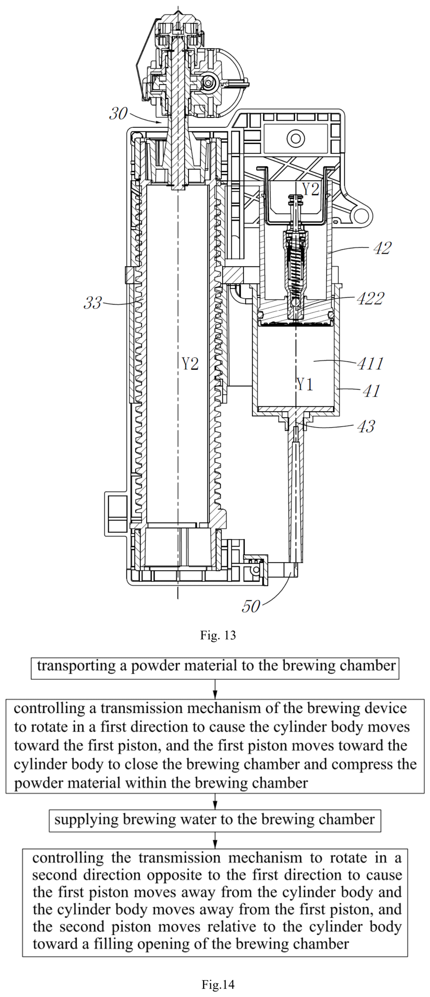

In the driving device 30 of the present application, a relative movement control between the second piston 43 and the cylinder body 41 is a key to achieving an automatic residue ejection function. As shown in Fig. 13, during a process in which the cylinder body 41 and the first piston 42 move toward each other, the second piston 43 has no relative movement with the cylinder body 41, i.e., is relatively stationary; as shown in Fig. 3, during a process in which the cylinder body 41 and the first piston 42 move away from each other, the second piston 43 moves relative to the cylinder body 41 toward the first piston 42.

This control method ensures that the position of the second piston 43 adapts to corresponding functional requirements in different working stages.

Specifically, during the compacting process (i.e., the process in which the cylinder body 41 and the first piston 42 move toward each other), the second piston 43 maintains relative stillness with the cylinder body 41, which can form a stable brewing environment, ensuring that the powder material is uniformly compacted into a powder block and improving the brewing effect. In this stage, the second piston 43 is located at the bottom of the brewing chamber 411, does not participate in the compacting action, and only serves as a part of the brewing chamber 411.

During the residue ejection process (i.e., the process in which the cylinder body 41 and the first piston 42 move away from each other), the second piston 43 moves relative to the cylinder body 41 toward the first piston 42. This is because after the brewing is completed, the powder residue 60 within the brewing chamber 411 needs to be ejected. At this time, the cylinder body 41 moves downward, and the first piston 42 moves upward. If the second piston 43 maintains a relative stillness with the cylinder body 41, the powder residue 60 would move downward together with the cylinder body 41, and the powder residue 60 would not be ejected; but what is actually needed is to eject the powder residue 60 from the cylinder body 41. Therefore, in this stage, the second piston 43 needs to move upward relative to the cylinder body 41 to eject the powder residue 60 until a lower surface of the powder residue 60 is flush with the filling opening 412 of the cylinder body 41.

This control method is implemented through the limiting member 50. During a process in which the cylinder body 41 moves downward, due to the limiting action of the limiting member 50, the second piston 43 cannot continue to move downward, only the cylinder body 41 moves downward, and the second piston 43 thus generates a relative movement with the cylinder body 41, at which time the powder residue 60 is ejected. This design cleverly utilizes the principle of relative movement, achieving the residue ejection function without requiring an additional driving source.

The second piston 43 lifts the powder residue 60 until the lower surface of the powder residue 60 is flush with the filling opening 412 of the cylinder body 41. This design enables the powder residue 60 to be effectively removed by the sweeping member 45.

In actual use, the working method of the second piston 43 closely cooperates with the overall workflow of the driving device 30. When the motor 31 drives the transmission mechanism 32 to rotate in one direction, it drives the cylinder body 41 and the first piston 42 to move toward each other for powder material compacting; when the motor 31 rotates in reverse, it drives the cylinder body 41 and the first piston 42 to move away from each other, while the second piston 43 moves relative to the cylinder body 41 for residue ejection. This coordinated working mechanism greatly improves the working efficiency and reliability of the driving device 30.

Through a careful design of the working method of the second piston 43, the driving device 30 of the present application achieves effective integration of powder material compacting, brewing, and residue ejection functions, providing reliable guarantee for a rapid preparation of high-quality beverages.

The present application further provides a beverage machine, and the beverage machine may include the brewing device 100 in any of the above embodiments.

As shown in Figs. 1 to 6, the first piston 42 is provided with a second transport pipeline 422. The second transport pipeline 422 is one of the liquid transmission channels and can be used to transport brewing water or extracted beverage.

The the second piston 43 is provided with a first transport pipeline 431. The second piston 43 is mainly used to eject the powder residue 60 after the brewing is completed, and is also provided with the first transport pipeline 431, forming a part of the liquid transmission system.

One of the first transport pipeline 431 and the second transport pipeline 422 is configured to supply brewing water to the brewing chamber 411, and another one of the first transport pipeline 431 and the second transport pipeline 422 is configured to output beverage from the brewing chamber 411. This dual pipeline design achieves a rational layout of the water circuit system, enabling supply of the brewing water and output of the beverage to be conducted through different channels respectively, avoiding mixing and cross contamination.

In terms of a movement control, the first piston 42 has a first relative position in contact with the cylinder body 41 and a second relative position at least partially compressing the brewing chamber 411. Between the first relative position and the second relative position, the driving device 30 drives the cylinder body 41 and the first piston 42 to simultaneously move in opposite directions.

This bidirectional synchronous movement design is one of the core technical features of the present application, which shortens the brewing stroke, reduces the beverage production time, and improves the beverage preparation efficiency.

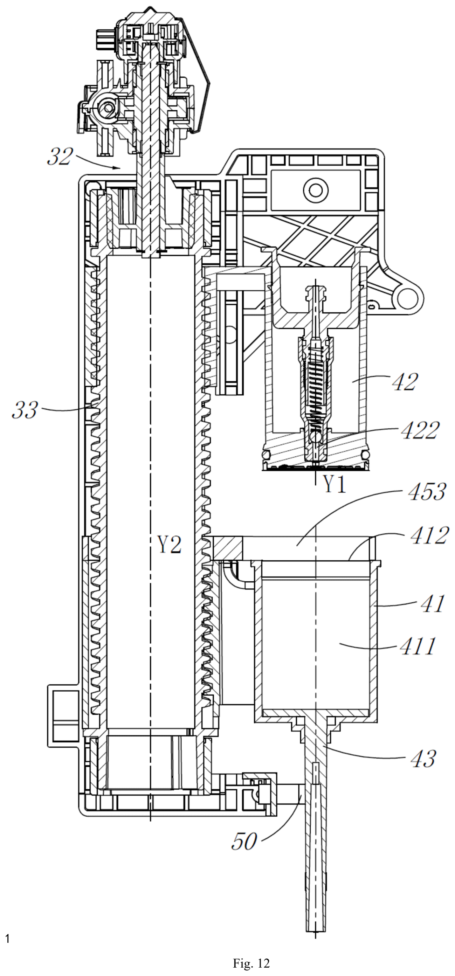

The present application further provides a control method for a brewing device 100, applicable to the above brewing device 100. As shown in Figs. 1 to 13, the brewing device 100 includes: a cylinder body 41, the cylinder body 41 having a brewing chamber 411; a first piston 42 configured to be movable to close or open the brewing chamber 411; a second piston 43 configured to move relative to the cylinder body 41 within the brewing chamber 411. The control method ensures an efficient progress of the brewing process through orderly step arrangements.

As shown in Fig. 14, the control method for the brewing device 100 includes the following basic steps: first, transporting powder material to the brewing chamber 411; then, controlling a transmission mechanism 32 of the brewing device 100 to rotate in a first direction to cause the cylinder body 41 to move toward the first piston 42, and the first piston 42 to move toward the cylinder body 41 to close the brewing chamber 411 and compress the powder material within the brewing chamber 411; finally, supplying brewing water to the brewing chamber 411 to perform a beverage preparation.

This sequence arrangement ensures an orderly progress of the entire process from powder material filling and powder material compacting to brewing.

In one embodiment, after transporting the powder material to the brewing chamber 411, and before controlling the transmission mechanism 32 of the brewing device 100 to rotate in the first direction, the above method further includes: controlling the transmission mechanism 32 to rotate in the first direction to cause the cylinder body 41 to rotate from a second position to a first position coaxial with the first piston 42, and the first piston 42 to move toward the cylinder body 41.

This step is a key link in the brewing process, which rotates the cylinder body 41 from the second position back to the first position while controlling the first piston 42 to approach the cylinder body 41, preparing for subsequent powder material compacting and brewing. During a process in which the cylinder body 41 rotates back from the powder receiving position, the first piston 42 is already moving in a direction approaching the cylinder body 41. In this way, the powder material compacting process can be accelerated, the beverage production time can be shortened, and the beverage production efficiency can be improved.

After supplying the brewing water to the brewing chamber 411 to perform the beverage preparation, i.e., after the brewing is completed, the above method further includes steps for cleaning the powder residue 60: controlling the transmission mechanism 32 to rotate in a second direction opposite to the first direction to cause the first piston 42 to move away from the cylinder body 41, and the cylinder body 41 to move away from the first piston 42, and the second piston 43 to move relative to the cylinder body 41 toward a filling opening 412 of the brewing chamber 411.

In this step, the cylinder body 41 and the first piston 42 move away from each other, i.e., the cylinder body 41 moves downward, the first piston 42 moves upward, while the second piston 43 moves upward relative to the cylinder body 41, ejecting the powder residue 60 until a lower surface of the powder residue 60 is flush with the filling opening 412 of the cylinder body 41, preparing for subsequent sweeping.

Next, the above method further includes: continuing to control the transmission mechanism 32 to rotate in the second direction to cause the first piston 42 to move away from the cylinder body 41, and the cylinder body 41 to rotate from the first position to the second position, and the second piston 43 to move relative to the cylinder body 41 away from the filling opening 412 of the brewing chamber 411.

This step rotates the cylinder body 41 back to the powder receiving position while controlling a relative movement of the second piston 43, preparing for a next powder material filling and completing one complete brewing cycle.

In an implementation of the control method, movement parameters can be precisely controlled according to specific requirements. For example, during a process in which the cylinder body 41 moves toward or away from the first piston 42, a movement speed of the first piston 42 and a movement speed of the cylinder body 41 can be set to be equal; or a movement path length of the first piston 42 and a movement path length of the cylinder body 41 can be set to be equal.

These settings ensure pressure uniformity and stability during the brewing process, improving the brewing quality.

The control method of the present application fully utilizes the structural characteristics of the brewing device 100 having a dual-direction threaded main shaft 33, and achieves an efficient, high-quality beverage preparation process through a precise control of movements of the cylinder body 41, the first piston 42, and the second piston 43. Compared to traditional control methods, the method of the present application has obvious advantages in the following aspects:

First, by controlling the transmission mechanism 32 to rotate in a specific direction, a simultaneous reverse movement of the cylinder body 41 and the first piston 42 is achieved, shortening the brewing stroke, reducing production time, and improving working efficiency.

Second, through coordinated control of rotation and axial movement of the cylinder body 41, a smooth transition of powder receiving, brewing, and cleaning functions is achieved, making the entire preparation process more continuous.

Finally, through precise control of the movement of the second piston 43, the effective ejection and cleaning of the powder residue 60 is achieved, improving the cleanliness level of the equipment.

In summary, the control method for the brewing device 100 of the present application, through scientific step arrangement and precise motion control, fully utilizes the technical advantages of the brewing device 100, providing a reliable process guarantee for the rapid preparation of high-quality beverages.

The present application provides a brewing device 100, a driving device 30, a beverage machine, and a control method for the brewing device 100. Through innovative structural design and control strategies, it solves many technical problems existing in traditional brewing equipment, significantly improving the efficiency and quality of beverage preparation.

The technical solutions provided by the present application are applicable to various beverage machines requiring brewing, such as coffee machines and tea brewers. Compared to the prior art, the present application has significant advantages in preparation efficiency, brewing quality, structural compactness, and service life, providing users with a more convenient and efficient user experience.

## Claims

1. A brewing device (100), comprising:
a frame (20);
a motor (31) provided on the frame (20);
a transmission mechanism (32) driven by the motor (31);
a cylinder body (41) drivably connected to the transmission mechanism (32), the power from the motor (31) is transmitted to the cylinder body (41) via the transmission mechanism (32), the cylinder body (41) having a brewing chamber (411), the brewing chamber (411) having a filling opening (412) for filling powder material;
a first piston (42) drivably connected to the transmission mechanism (32), the first piston (42) receives the power transmitted from the motor (31) via the transmission mechanism (32) to close the brewing chamber (411) by passing through the filling opening (412), the first piston (42) defining a first axis (Y1);
a second piston (43) engaged with the cylinder body (41), the second piston (43) and the cylinder body (41) being capable of moving relative to each other;
**characterized in that**, the first piston (42) and the cylinder body (41) move relative to each other to perform a powder material compacting process in the brewing chamber (411), the second piston (43) and the cylinder body (41) move relative to each other to perform a powder residue ejection process from the filling opening (412); during the powder material compacting process, the transmission mechanism (32) drives the cylinder body (41) and the first piston (42) to move toward each other along the first axis (Y1); during the powder residue ejection process, the transmission mechanism (32) drives the cylinder body (41) and the first piston (42) to move away from each other along the first axis (Y1).

2. The brewing device (100) according to claim 1, wherein the transmission mechanism (32) comprises a first guide portion (321) and a second guide portion (322), the first piston (42) is drivably connected to the first guide portion (321), the cylinder body (41) is drivably connected to the second guide portion (322), the first guide portion (321) and the second guide portion (322) have opposite guiding directions; the motor (31) drives the transmission mechanism (32) to move, the transmission mechanism (32) drives the first piston (42) to move through the first guide portion (321), and simultaneously drives the cylinder body (41) to move through the second guide portion (322).

3. The brewing device (100) according to claim 2, wherein the transmission mechanism (32) is configured as a threaded main shaft (33), the axis of the threaded main shaft (33) is parallel to the first axis (Y1), the motor (31) drives the threaded main shaft (33) to rotate; the threaded main shaft (33) comprises a first threaded section (331) and a second threaded section (332), the first guide portion (321) is configured as the first threaded section (331), the second guide portion (322) is configured as the second threaded section (332), the first threaded section (331) and the second threaded section (332) have opposite thread hands.

4. The brewing device (100) according to claim 3, wherein the threaded main shaft (33) is configured in one of the following ways:
the first threaded section (331) and the second threaded section (332) have equal thread leads, and the first threaded section (331) and the second threaded section (332) have equal thread engagement lengths;
the first threaded section (331) has a thread lead greater than a thread lead of the second threaded section (332), and the first threaded section (331) has a thread engagement length smaller than a thread engagement length of the second threaded section (332);
the first threaded section (331) has a thread lead smaller than a thread lead of the second threaded section (332), and the first threaded section (331) has a thread engagement length greater than a thread engagement length of the second threaded section (332);
the first threaded section (331) and the second threaded section (332) are configured to drive the cylinder body (41) and the first piston (42) to move toward or away from each other along the first axis (Y1) at equal speeds;
the first threaded section (331) and the second threaded section (332) are configured to drive the cylinder body (41) and the first piston (42) to move toward or away from each other along the first axis (Y1) through equal path lengths;
the first threaded section (331) and the second threaded section (332) are arranged sequentially along the axial direction of the threaded main shaft (33);
the first threaded section (331) and the second threaded section (332) intersect along the axial direction of the threaded main shaft (33).

5. The brewing device (100) according to any one of claims 2 to 4, wherein the brewing device (100) further comprises a powder channel (25) provided on the frame (20), the transmission mechanism (32) is capable of driving the cylinder body (41) to rotate between a first position and a second position, at the first position, the filling opening (412) and the outlet of the powder channel (25) are axially offset, and the brewing chamber (411) axially aligns with the first piston (42) along the first axis (Y1); at the second position, the filling opening (412) axially aligns with the outlet of the powder channel (25) along the first axis (Y1), and the brewing chamber (411) and the first piston (42) are axially offset; a rotation angle of the cylinder body (41) rotating between the first position and the second position is less than 90 degrees.

6. The brewing device (100) according to any one of claims 1 to 4, wherein the brewing device (100) further comprises a sweeping member (45) provided above the cylinder body (41), a holding element (46) is disposed between the sweeping member (45) and the cylinder body (41), the sweeping member (45) is supported above the cylinder body (41) through the holding element (46); during a process in which the brewing chamber (411) moves from a position axially aligned with the first piston (42) along the first axis (Y1) to a position axially offset from the first piston (42), the sweeping member (45) sweeps across an upper edge of the cylinder body (41).

7. The brewing device (100) according to any one of claims 2 to 4, wherein the transmission mechanism (32) is configured as a threaded main shaft (33), and the first piston (42) and the cylinder body (41) are respectively drivably connected to different regions of the threaded main shaft (33);
the threaded main shaft (33) is further configured to drive the first piston (42) and the cylinder body (41) to rotate relative to the frame (20), or to drive one of the first piston (42) and the cylinder body (41) to rotate, and another one of the first piston (42) and the cylinder body (41) to move along the first axis (Y1).

8. The brewing device (100) according to any one of claims 2 to 4, wherein the transmission mechanism (32) is configured as a shaft cylinder, the axis of the shaft cylinder is parallel to the first axis (Y1), the first guide portion (321) and the second guide portion (322) are disposed on an outer circumferential surface of the shaft cylinder; the first guide portion (321) is configured as a first guide groove, the second guide portion (322) is configured as a second guide groove, the first guide groove and the second guide groove have opposite guiding directions; the motor (31) drives the shaft cylinder to rotate, the first piston (42) is drivably connected to the first guide groove, and the cylinder body (41) is drivably connected to the second guide groove.

9. The brewing device (100) according to any one of claims 1 to 4, wherein driven by the transmission mechanism (32), the cylinder body (41) is capable of rotating between a first position and a second position, at the first position, the brewing chamber (411) axially aligns with the first piston (42) along the first axis (Y1); at the second position, the brewing chamber (411) and the first piston (42) are axially offset; the cylinder body (41) satisfies at least one of the following ways:
during a process in which the transmission mechanism (32) drives the cylinder body (41) to rotate from the second position to the first position, the transmission mechanism (32) drives the first piston (42) to move along the first axis (Y1) toward the cylinder body (41);
during a process in which the transmission mechanism (32) drives the cylinder body (41) to rotate from the first position to the second position, the transmission mechanism (32) drives the first piston (42) to move along the first axis (Y1) away from the cylinder body (41).

10. The brewing device (100) according to claim 9, wherein the brewing device (100) satisfies at least one of the following features:
the brewing device (100) further comprises a powder channel (25) provided on the frame (20), and when the cylinder body (41) is at the second position, a portion of the powder channel (25) extends into the brewing chamber (411);
the cylinder body (41) further has a sweeping position, at the sweeping position, the brewing chamber (411) and the first piston (42) are axially offset, the cylinder body (41) moves to the sweeping position to perform a sweeping action, the sweeping position is located between the first position and the second position, or the sweeping position is the same as the second position;
the frame (20) comprises a first side plate (21) and a second side plate (22) disposed at intervals, the first piston (42) is disposed between the first side plate (21) and the second side plate (22), the first side plate (21) and the second side plate (22) restrict the first piston (42) and the cylinder body (41) from rotating relative to the frame (20); the second side plate (22) is provided with a clearance opening (223), and the clearance opening (223) allows the cylinder body (41) to pass through to enable the cylinder body (41) to rotate relative to the frame (20);
during a process in which the cylinder body (41) and the first piston (42) move toward each other, the second piston (43) remains stationary relative to the cylinder body (41); during a process in which the cylinder body (41) and the first piston (42) move away from each other, the second piston (43) moves relative to the cylinder body (41) toward the first piston (42).

11. The brewing device (100) according to claim 9, wherein the transmission mechanism (32) is configured as a single transmission component rotating around a second axis (Y2), the first axis (Y1) is disposed vertically and is mutually parallel to and spaced from the second axis (Y2), and during a process in which the cylinder body (41) rotates from the second position to the first position, a rotation direction of the single transmission component is the same as a rotation direction of the cylinder body (41).

12. The brewing device (100) according to claim 5, wherein the brewing device (100) further comprises a limiting member (50), the limiting member (50) comprises a pivot portion (51) and a cantilever arm (52), the pivot portion (51) is rotatably connected to the frame (20), the cantilever arm (52) uses the pivot portion (51) as a swing pivot point; an elastic element (53) is disposed between the cantilever arm (52) and the frame (20), during a process in which the cylinder body (41) rotates from the second position to the first position, the second piston (43) presses against the cantilever arm (52) to cause the elastic element (53) to deform; the cylinder body (41) and the first piston (42) move toward each other, and the second piston (43) separates from the cantilever arm (52) to enable the cantilever arm (52) to reset under a restoring force of the elastic element (53); the cylinder body (41) and the first piston (42) move away from each other, the cantilever arm (52) abuts against the second piston (43) along the axial direction of the pivot portion (51), and the second piston (43) moves relative to the cylinder body (41) under pressing of the cantilever arm (52) until being flush with the filling opening (412).

13. A beverage machine, **characterized in that**, the beverage machine comprising the brewing device (100) according to any one of claims 1 to 12, the first piston (42) being provided with a second transport pipeline (422); the second piston (43) being provided with a first transport pipeline (431);
wherein one of the first transport pipeline (431) and the second transport pipeline (422) is configured to supply brewing water to the brewing chamber (411), and another one of the first transport pipeline (431) and the second transport pipeline (422) is configured to output beverage from the brewing chamber (411); the first piston (42) has a first relative position in contact with the cylinder body (41) and a second relative position at least partially compressing the brewing chamber (411); between the first relative position and the second relative position, the transmission mechanism (32) drives the cylinder body (41) and the first piston (42) to simultaneously move toward each other to reduce the volume of the brewing chamber (411), or to simultaneously move away from each other to expand the volume of the brewing chamber (411).

14. A control method for the brewing device (100) according to any one of claims 1 to 12, **characterized in that**, the method comprises:
transporting powder material to the brewing chamber (411);
controlling a transmission mechanism (32) of the brewing device (100) to rotate in a first direction to cause the cylinder body (41) and the first piston (42) to move toward each other, during the relative movement between the cylinder body (41) and the first piston (42), the cylinder body (41) moves toward the first piston (42), and the first piston (42) moves toward the cylinder body (41) to close the brewing chamber (411) and compress the powder material within the brewing chamber (411);
supplying brewing water to the brewing chamber (411) to perform beverage preparation.

15. The method according to claim 14, wherein after transporting the powder material to the brewing chamber (411), and before controlling the transmission mechanism (32) of the brewing device (100) to rotate in the first direction, the method further comprises:
controlling the transmission mechanism (32) to rotate in the first direction to cause the cylinder body (41) to rotate from a second position to a first position, and the first piston (42) to move toward the cylinder body (41); at the first position, the cylinder body (41) and the first piston (42) are coaxial;
optionally, after supplying the brewing water to the brewing chamber (411) to perform the beverage preparation, the method further comprises:
controlling the transmission mechanism (32) to rotate in a second direction opposite to the first direction to cause the cylinder body (41) and the first piston (42) to move away from each other, during the relative movement between the cylinder body (41) and the first piston (42), the first piston (42) moves away from the cylinder body (41), and the cylinder body (41) moves away from the first piston (42), and the second piston (43) moves relative to the cylinder body (41) toward a filling opening (412) of the brewing chamber (411);
controlling the transmission mechanism (32) to continue rotating in the second direction to cause the first piston (42) to move away from the cylinder body (41), and the cylinder body (41) to rotate from the first position to the second position, and the second piston (43) to move relative to the cylinder body (41) away from the filling opening (412)
